## Europäisches Patentamt
## European Patent Office
## Office européen des brevets

(19)

(11) Veröffentlichungsnummer: **0 034 597**
**B1**

(12) # EUROPÄISCHE PATENTSCHRIFT

(45) Veröffentlichungstag der Patentschrift:
**30.11.83**

(21) Anmeldenummer: **80901540.7**

(22) Anmeldetag: **14.08.80**

(86) Internationale Anmeldenummer:
**PCT/DE 80/00120**

(87) Internationale Veröffentlichungsnummer:
**WO 81/00586 (05.03.81** Gazette 81/6)

(51) Int. Cl.³: **E 05 B 49/00,** G 06 K 7/016

(54) **MIT MAGNETISCHEN MITTELN ARBEITENDES SCHLOSS.**

(30) Priorität: **17.08.79 DE 2933453**

(43) Veröffentlichungstag der Anmeldung:
**02.09.81 Patentblatt 81/35**

(45) Bekanntmachung des Hinweises auf die Patenterteilung:
**30.11.83 Patentblatt 83/48**

(84) Benannte Vertragsstaaten:
**AT CH FR GB LI**

(56) Entgegenhaltungen:
**FR - A - 2 137 279**
**FR - A - 2 229 842**
**GB - A - 2 026 081**

(73) Patentinhaber: **PERKUT, Branko R., Jochbergstrasse 10,
D-8174 Benediktbeuren (DE)**

(72) Erfinder: **PERKUT, Branko R., Jochbergstrasse 10,
D-8174 Benediktbeuren (DE)**

(74) Vertreter: **Lewinsky, Dietrich et al, Gotthardstrasse 81,
D-8000 München 21 (DE)**

Mit magnetischen Mitteln arbeitendes Schloß

Die Erfindung betrifft ein mit einem Schlüssel zu betätigendes Schloß, das einen Lesekopf aus einem ringförmig geschlossenen Joch mit einem in einem Luftspalt angeordneten Hallgenerator umfaßt, dessen magnetische Induktion sich in Abhängigkeit von der Stellung des längs seiner Achse aufeinanderfolgende, einen mindestens zweiwertigen (dualen) Code bildende magnetisch lesbare Informationsstellen tragenden Schlüssels ändert und dessen von dem Augenblickswert der Induktion abhängige Signalspannung eine Empfangsschaltung mit gespeicherten Sollinformationen vergleicht und bei Übereinstimmung die mechanische Sperrvorrichtung des Schlosses betätigt.

Ein derartiges Schloß ist aus der FR-PS 2 137 279 bekannt. Das Joch hat zusätzlich zu dem den Hallgenerator enthaltenden Luftspalt einen weiteren Luftspalt, an dem der Schlüssel vorbeigeführt wird. Die einzelnen Informationsstellen bestehen aus magnetischen Dipolen, deren Magnetisierungsrichtung parallel zu der Achse des Schlüsselkörpers verläuft. Das Vorzeichen der Magnetisierungsrichtung charakterisiert die jeweilige Codeziffer. Nachteilig hieran ist, daß die Schlüsselkodierung mit einfachsten Mitteln feststellbar ist. Weiter läßt dieses Prinzip keine höherwertigen Codes zu.

Das gleiche Problem besteht bei einem aus der DE-OS 2 546 542 bekannten Schloß, das darüber hinaus in derjenigen Ausführungsform, bei der der Schlüssel mit dauermagnetischen Informationsstellen unterschiedlicher Ausrichtung zur Bildung eines dualen Codes versehen ist, zwei Hallgeneratoren im Lesekopf benötigt. Zur Verarbeitung der von den Hallgeneratoren gelieferten Signalspannungen ist hierbei eine Taktspur erforderlich, die den Aufwand für Schloß und Schlüssel erhöht, unabhängig davon, ob sie mechanisch, magnetisch oder optoelektrisch ausgelesen wird.

Aus der DE-OS 2 546 542 ist auch schon ein Schloß mit einem Schlüssel bekannt, bei dem die magnetisch lesbaren Informationsstellen aus entsprechend angeordneten, weichmagnetischen Einlagen im Schlüsselkörper bestehen. Der Lesekopf des Schlosses enthält einen Dauermagneten und ist durch Polschuhe, die den Informationsstellen auf dem Schlüsselkörper zugeordnet sind, in ebenso viele magnetische Kreise unterteilt, wie Informationsstellen vorhanden sind. Jeder dieser magnetischen Kreise enthält einen eigenen Hallgenerator. Die Hallgeneratoren setzen die durch den eingeführten Schlüssel hervorgerufene magnetische Flußänderung in einen elektrischen Strom um, der zur Herstellung der Sperr- bzw. Freigabelage des Schlosses verwendet wird. Dieser Aufbau des Lesekopfes bedingt einen großen Raumbedarf des Schlosses und steht auch einer kostengünstigen Fertigung entgegen.

Der Erfindung liegt die Aufgabe zugrunde, ein mit einem Schlüssel zu betätigendes Schloß der einleitend angegebenen Gattung zu schaffen, das bei einfacher Herstellung einen hohen Verschlüsselungsgrad erlaubt.

Eine erste Lösung dieser Aufgabe ist im Patentanspruch 1 angegeben. Die Ansprüche 2 bis 4 beziehen sich auf vorteilhafte Ausführungsformen und Weiterbildungen dieser Lösung.

Eine zweite Lösung ist im Patentanspruch 5 angegeben.

Die Ansprüche 6 und 7 beinhalten vorteilhafte Ausführungsformen dieser Lösungen.

Eine dritte und eine vierte Lösung sind in den Ansprüchen 8 und 9 angegeben.

Der Anspruch 10 bezieht sich auf eine vorteilhafte Weiterbildung der vierten Lösung.

Eine fünfte, eine sechste und eine siebente Lösung sind in den Ansprüchen 11, 12 und 13 angegeben.

Die Ansprüche 14 bis 21 beziehen sich auf vorteilhafte Ausführungsformen und Weiterbildungen aller oder einzelner dieser zuletztgenannten Lösungen.

Die Erfindung wird nachfolgend anhand der Zeichnung erläutert, die beispielsweise gewählte Ausführungsformen, teilweise in schematischer Vereinfachung, sowie erläuternde Diagramme und Schaltbilder umfaßt. Es zeigt

Fig. 1 eine erste Ausführungsform des Lesekopfes im Schloß sowie des zugehörigen Schlüsselkörpers in schematischer Vereinfachung,

Fig. 2 bis 6 die Lage der Codierstücke in dem Lesekopf nach Fig. 1 bei verschiedenen Stellungen des Schlüsselkörpers,

Fig. 7 die Schaltung zur Erzeugung der Signalspannung des Hallgenerators,

Fig. 8 ein Diagramm der Signalspannung in Abhängigkeit von der Induktion durch den Hallgenerator,

Fig. 9 eine Schaltung zur Gewinnung logischer Spannungshebel aus der Signalschaltung,

Fig. 10a bis 10c Diagramme der Spannungspegel in Abhängigkeit von der Signalspannung,

Fig. 11 eine Schaltung zum Vergleich der Istwerte der Spannungshebel mit den gespeicherten Sollwerten,

Fig. 12 Diagramme der in den Schaltungen nach den Fig. 7, 9 und 11 auftretenden Signalbzw. Spannungspegel,

Fig. 13 eine weitere Ausführungsform des Lesekopfes mit zugehörigem Schlüssel,

Fig. 14a bis 14c Aufsichten auf den Lesekopf nach Fig. 13, bei verschiedener Lage der Codierstücke,

Fig. 15 eine weitere Ausführungsform des Lesekopfes mit Schlüssel,

Fig. 16a bis 16c eine Aufsicht auf den Lesekopf nach Fig. 15 bei verschiedenen Lagen der Codierstücke,

Fig. 17, 17a eine weitere Ausführungsform des Lesekopfes mit Schlüssel,

Fig. 18, 19 Schnitte durch den Lesekopf nach Fig. 17 bei verschiedenen Stellungen des Schlüsselkörpers,

Fig. 20 einen Schnitt durch einen Lesekopf ähnlich Fig. 17,

Fig. 21a, 21b Aufsichten auf den Lesekopf gemäß Fig. 20 in zwei verschiedenen Stellungen der Codierstücke,

Fig. 22 ein Diagramm der Signalspannung in Abhängigkeit von der Induktion durch den Hallgenerator für die Ausführungsform gemäß den Fig. 17 bis 21b,

Fig. 23 eine Schaltung zur Gewinnung logischer Spannungspegel aus der Signalspannung,

Fig. 24 ein Diagramm der logischen Spannungspegel,

Fig. 25 eine Schaltung für die weitere Aufbereitung der logischen Spannungspegel,

Fig. 26 Diagramme der verschiedenen Spannungspegel in Abhängigkeit von der Stellung des Schlüssels,

Fig. 27 ein der Fig. 26 entsprechendes Diagramm der Spannungspegel im Falle der Verwendung eines vierwertigen Codes für jede Informationsstelle,

Fig. 28 ein Diagramm der Signalspannung in Abhängigkeit von der magnetischen Induktion durch den Hallgenerator bei Verwendung eines vierwertigen Codes,

Fig. 29 eine Schaltung zur Aufbereitung der Signalspannung in logische Spannungspegel sowie deren Verlauf in Abhängigkeit von der Signalspannung,

Fig. 30 eine Schaltung zur weiteren Aufbereitung der logischen Spannungspegel,

Fig. 31 eine weitere Ausführungsform des Schlüsselkörpers,

Fig. 32a einen Schnitt durch den Schlüsselkörper gemäß Fig. 31 längs der Linie I-I,

Fig. 32b einen Schnitt durch den Schlüsselkörper gemäß Fig. 31 gemäß der Linie II-II,

Fig. 33a einen Schnitt durch einen etwas abgewandelten Schlüsselkörper ähnlich Fig. 31,

Fig. 33b eine Aufsicht auf den Schlüsselkörper gemäß Fig. 33a,

Fig. 34a, 34b Aufsichten auf einen Lesekopf für den Schlüsselkörper nach den Fig. 31 bis 33b,

Fig. 35 eine weitere Ausführungsform des Lesekopfes und des Schlüssels,

Fig. 36a, 36b Ansichten des Lesekopfes gemäß Fig. 35 in zwei verschiedenen Stellungen der Codierstücke,

Fig. 36c eine Ansicht des Lesekopfes nach Fig. 35 mit einer umschlagsymmetrischen Ausführung eines Codierstückes,

Fig. 37a, 37b den gleichen Lesekopf bei vereinfachter Ausführungsform der Codierstücke,

Fig. 37c den gleichen Lesekopf mit einer umschlagsymmetrischen Anordnung von zwei vereinfachten Codierstücken,

Fig. 38 eine weitere Ausführungsform des Lesekopfes mit Schlüssel,

Fig. 39 eine Ansicht des Schlüsselkörpers der Fig. 38 von unten,

Fig. 40a, 40b den Lesekopf nach Fig. 38 in zwei Stellungen des Schlüsselkörpers,

Fig. 41 eine Aufsicht auf den Lesekopf nach Fig. 38,

Fig. 42 den Lesekopf nach Fig. 38 mit einer abgewandelten Ausführungsform der Codierstücke,

Fig. 43 den Lesekopf nach Fig. 38 mit umschlagsymmetrischen Codierstücken,

Fig. 44 eine weitere Ausführungsform des Lesekopfes mit Schlüsselkörper,

Fig. 45a, 45b einen Schnitt durch den Lesekopf nach Fig. 44 in zwei Stellungen der Codierstücke,

Fig. 46 eine andere Ausführungsform des Schlüsselkörpers nach Fig. 44,

Fig. 47 eine vergrößerte Schnittdarstellung des den Hallgenerator enthaltenden Bereiches des Lesekopfes nach Fig. 44,

Fig. 48 eine weitere Ausführungsform des Lesekopfes mit Schlüsselkörper,

Fig. 49a, 49b einen Schnitt durch den Lesekopf nach Fig. 48 in zwei Stellungen der Codierstücke und

Fig. 50 eine vergrößerte Schnittdarstellung des den Hallgenerator enthaltenden Bereiches des Lesekopfes nach Fig. 48.

Von dem Schloß mit Schlüssel sind in den Figuren jeweils lediglich die zum Verständnis der Erfindung notwendigen Teile, d. h. der Lesekopf des Schlosses und ein Abschnitt des Schlüsselkörpers, dargestellt.

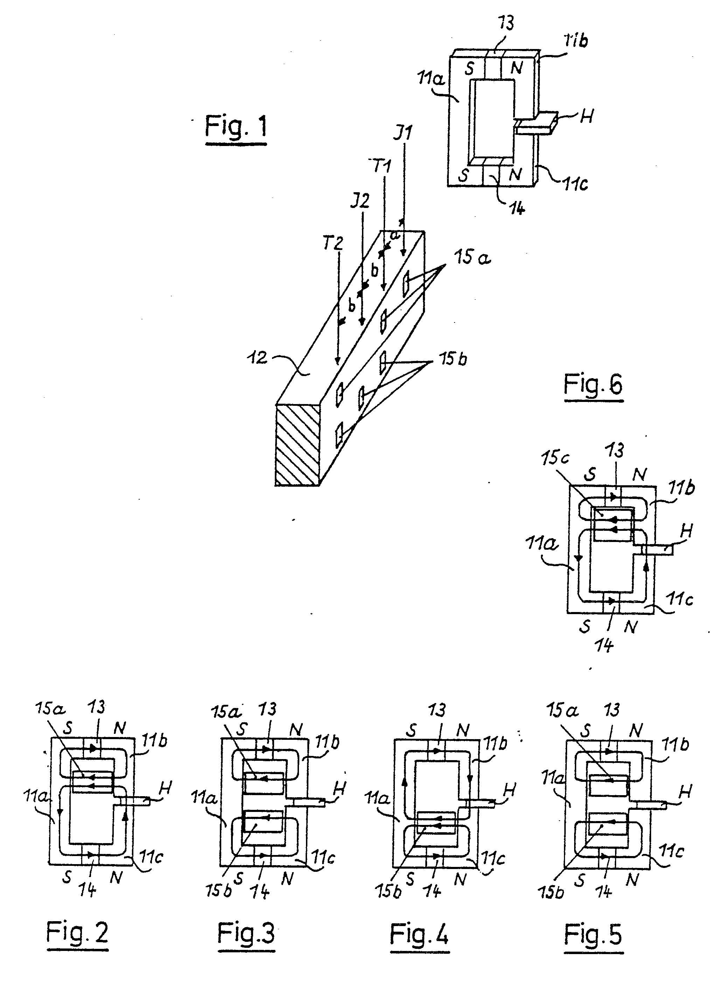

Fig. 1 zeigt einen Lesekopf bestehend aus einem magnetisch leitenden Joch, das in der Mitte eine rechteckige Öffnung zum Hindurchführen eines Schlüsselkörpers 12 ebenfalls rechteckigen Querschnittes aufweist. Das Joch besteht aus Flußleitstücken 11a, 11b, 11c sowie zwei symmetrisch zueinander angeordneten Magneten 13, 14, deren magnetische Achsen entsprechend den angegebenen Polen S und N gegeneinander gerichtet sind. Zwischen den Flußleitstücken 11b und 11c befindet sich die sehr kleine, in der Figur nicht sichtbare magnetempfindliche Fläche eines Hallgenerators H. Die Anschlüsse für die Versorgungsspannung und für die Signalspannung des Hallgenerators sind nicht gezeichnet.

Der Schlüsselkörper 12 besteht aus unmagnetischem Material und trägt Informationsstellen J1, J2, auf die jeweils eine Taktebene T1, T2 folgt. An den Informationsstellen wird der Schlüsselkörper 12 von einem Codierstück 15a, 15b aus beliebigem, weichmagnetischem Material durchquert. Die Codierung entspricht einem zweiwertigen (dualen) Code. Jede Informationsstelle kann somit entweder den logischen Wert Null (im folgenden log. 0) oder den logischen Wert Eins (im folgenden log. 1) annehmen. Die Codeziffer log. 0 oder log. 1 wird durch die Lage des Codierstückes innerhalb einer Informationsstelle unterschieden, wobei die Zuordnung grundsätzlich beliebig ist. Die Informationsstelle J1 mit dem Codierstück 15a möge daher log. 1 bedeuten, die Informationsstelle J2 mit dem Codierstück 15b möge log. 0 bedeuten. Die Taktebenen T1, T2 unterscheiden sich von den Informationsstellen dadurch, daß sie mit beiden Codierstücken 15a, 15b besetzt sind. Auf seinen beiden freien Schmalseiten kann der Schlüsselkörper im übrigen als konventioneller Schlüssel mit Einkerbungen, Ausfräsungen oder dergleichen versehen sein, die mit entsprechenden mechanischen Zuhaltungen im Schloß zusammenwirken. Diese Teile sind nicht gezeichnet, da sie Stand der Technik sind und in keinem Zusammenhang mit der Erfindung stehen.

Beim Einführen des Schlüsselkörpers nach Fig. 1 in das Joch des Lesekopfes ergeben sich nacheinander die in den Fig. 2 bis 5 dargestellten Zustände des magnetischen Flusses in dem Joch und durch den Hallgenerator H. Wie durch die Flußlinien verdeutlicht, unterscheiden sich die Codeziffern log. 1 (Fig. 2) und log. 0 (Fig. 4) dadurch, daß der Hallgenerator H einmal in der einen Richtung, das andere Mal in der entgegengesetzten Richtung von dem Magnetfluß durchsetzt wird. Die Codierstücke 15a, 15b bilden also an den Informationsstellen jeweils zu dem Hallgenerator H unsymmetrische Nebenschlüsse. Demgegenüber werden die Taktebenen dadurch erkannt, daß in der entsprechenden Stellung des Schlüsselkörpers (Fig. 3 und 5) kein Magnetfluß durch den Hallgenerator verläuft, da die Codierstücke 15a, 15b zu dem Hallgenerator symmetrische Nebenschlüsse erzeugen.

Zur Erzeugung eines Rückstellimpulses für die auf den Lesekopf folgende Empfangsschaltung wird die erste Informationsstelle J1 besonders kenntlich gemacht. Dies kann gemäß Fig. 1 dadurch erfolgen, daß der Abstand a der ersten Informationsstelle J1 von der Taktebene T1 größer als die Abstände b zwischen den darauffolgenden Taktebenen und Infomationsstellen gemacht wird. Zwar ergibt sich bereits ohne diese Maßnahme für die Informationsstelle J1 eine größere Induktion im bzw. durch den Hallgenerator H, weil der durch die Informationsstelle J1 erzeugte magnetische Fluß nur durch eine Taktebene, nämlich die Taktebene T1 bedämpft wird, während der durch alle folgenden Informationsstellen hervorgerufene magnetische Fluß durch die Codierstücke sowohl der vorangehenden als auch der darauffolgenden Taktebene bedämpft wird. Durch den vergrößerten Abstand a wird dieser Effekt jedoch noch unterstützt. Eine weitere Erhöhung der durch die erste Informationsstelle hervorgerufenen Induktion durch den Hallgenerator läßt sich gemäß Fig. 6 dadurch erreichen, daß das erste Codierstück 15c einen größeren Querschnitt besitzt als alle übrigen Codierstücke 15a, 15b. Die höhere Induktion führt zu einer besonders großen Signalspannung, durch die die erste Informationsstelle J1 identifiziert wird.

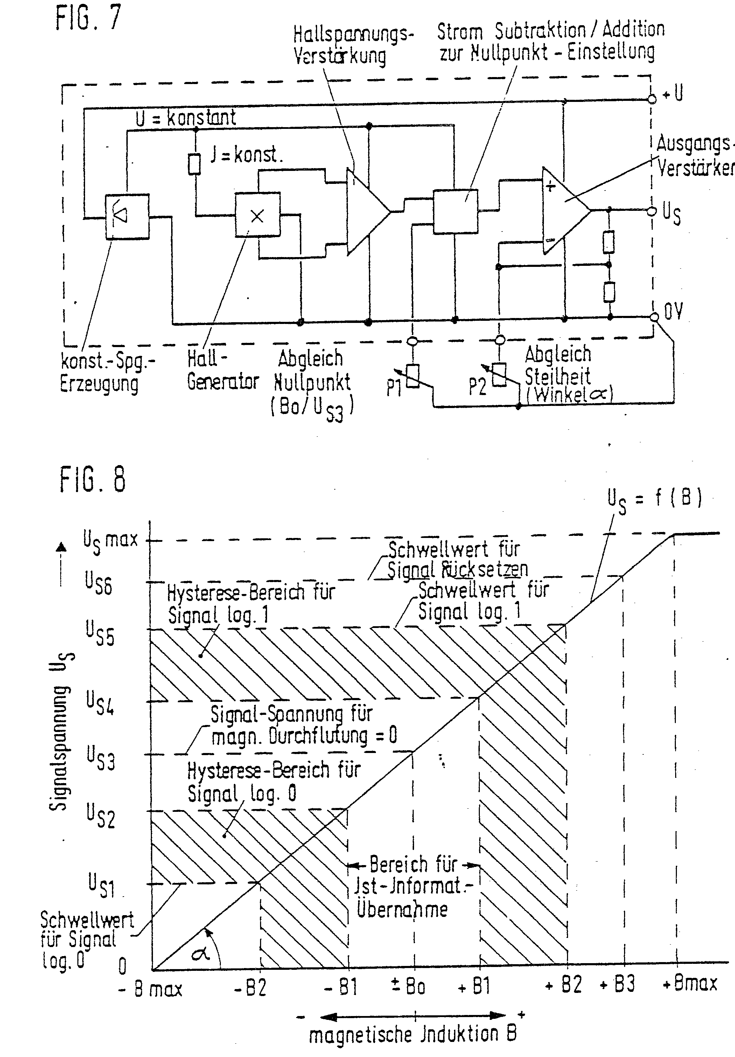

Der Hallgenerator ist vorzugsweise Bestandteil eines in Fig. 7 dargestellten Hallgeneratorbausteins (z. B. SAS 231 L der Siemens AG), der die notwendigen Schaltungen zum Betrieb des Hallgenerators, zur Verstärkung der induktionsabhängigen Hallspannung, zum Nullpunktabgleich und zum Empfindlichkeitsabgleich (Steilheit) enthält, lediglich eine Betriebsspannung $+U$ von beispielsweise 12 Volt benötigt und die Signalspannung $U_S$ abgibt. Für einen Lesekopf gemäß Fig. 1 wird mittels eines Potentiometers P1 für eine magnetische Induktion $B = 0$ die Signalspannung $U_S$ auf den Wert $U_{Smax}/2$ eingestellt, so daß bei dem Maximalwert der magnetischen Induktion B in der einen Richtung durch den Hallgenerator die Signalspannung den Wert $U_S = 0$ erreicht, während sie bei der gleichen Induktion in der entgegengesetzten Richtung durch den Hallgenerator den Wert $U_{Smax}$ erreicht. Mit einem Potentiometer P2 wird die Empfindlichkeit des Hallgeneratorbausteins auf einen passenden Wert von beispielsweise $U_{Smax} = 10$ Volt für eine magnetische Induktion $+B_{max} = 100$ m Tesla eingestellt.

Man erhält auf diese Weise den in Fig. 8 dargestellten Zusammenhang zwischen der Signalspannung $U_S$ und der Induktion B durch den Hallgenerator. Zur Erzielung eines ausreichenden Störabstandes für die Erkennung der Codeziffern und der Taktebenen werden entsprechende Toleranzbereiche festgelegt. Eine Induktion $B < -B2$ entsprechend einer Signalspannung $U_S < U_S1$ wird beispielsweise als log. 0 erkannt, eine Induktion $B > B2$ entsprechend $U_S > U_S5$ wird als log. 1 erkannt, $-B1 < B < +B1$ entsprechend einer Signalspannung $U_S2 < U_s < U_S4$ wird als die Übernahme der vorangehenden Informationsstelle (Ist-Information) steuernde Taktebene erkannt. Eine Induktion $B > B3$ entsprechend $U_S > U_S6$ wird als eine erste Informationsstelle J1 auf dem Schlüsselkörper erkannt, die das Rücksetzsignal für die Empfangsschaltung auslöst. Die Toleranzfelder oder Hysteresebereiche für log. 0 und für log. 1 sind in Fig. 8 schraffiert dargestellt.

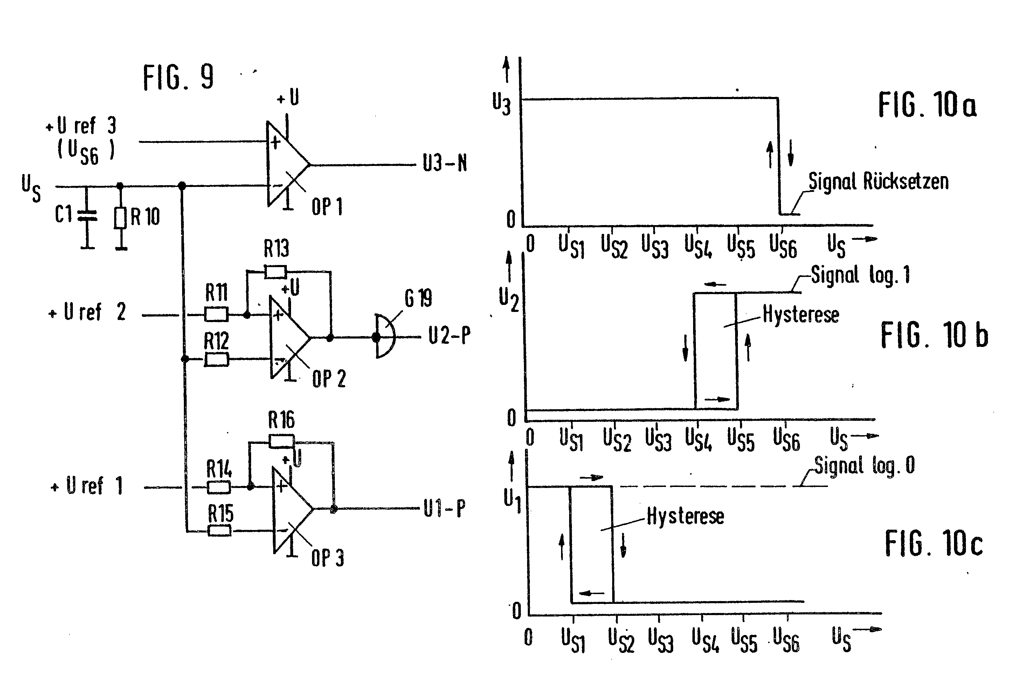

Fig. 9 zeigt eine Schaltung zur Umwandlung der Signalspannung $U_S$ in digitale Spannungspegel. Am Eingang der Schaltung liegt ein Entstörsignal, bestehend aus dem Widerstand R10 und dem Kondensator C1. Die Signalspannung $U_S$ wird dem invertierenden Eingang eines Operationsverstärkers OP1 zugeführt, an dessen nichtinvertierenden Eingang eine Bezugsspannung $+U$ ref 3 anliegt. U ref 3 wird gleich $U_S6$ (vgl. Fig. 8) gewählt, so daß bei $U_S > U_S6 = U$ ref 3 am Ausgang des Operationsverstärkers OP1 das Rücksetzsignal U3-N entsprechend dem Diagramm in Fig. 10a erscheint.

Die Signalspannung $U_S$ wird weiterhin parallel über Widerstände R12, R15 den invertierenden Eingängen von zwei Operationsverstärkern OP2, OP3 zugeführt, an deren nicht invertierenden Eingängen über Widerstände R11, R14 Referenzspannungen $+U$ ref 2 bzw. $+U$ ref 1 anliegen. Gleichzeitig sind die Ausgänge der Operationsverstärker OP2, OP3 über Widerstände R13 bzw. R16 mit dem zugehörigen, nichtinvertierenden Eingang verbunden. Durch diese Mitkopplung erhalten die Operationsverstärker ein Schaltverhalten mit dem anhand der Fig. 8 geschilderten Hysteresebereich. Dem Operationsverstärker OP2 ist ein invertierendes Gatter G19 nachgeschaltet. Den Verlauf der Ausgangsspannung U2-P für den Operationsverstärker OP2 in Abhängigkeit von der Signalspannung $U_S$ zeigt Fig. 10b, den Verlauf der Ausgangsspannung U1-P des Operationsverstärkers OP3 in Abhängigkeit von der Signalspannung $U_S$ zeigt Fig. 10c. Eine positive Ausgangsspannung nach dem Gatter G19 des Operationsverstärkers OP2 möge dabei das Vorliegen einer Codeziffer log. 1 bedeuten, eine positive Ausgangsspannung des Operationsverstärkers OP3 bedeutet dann das Vorliegen einer Codeziffer log. 0.

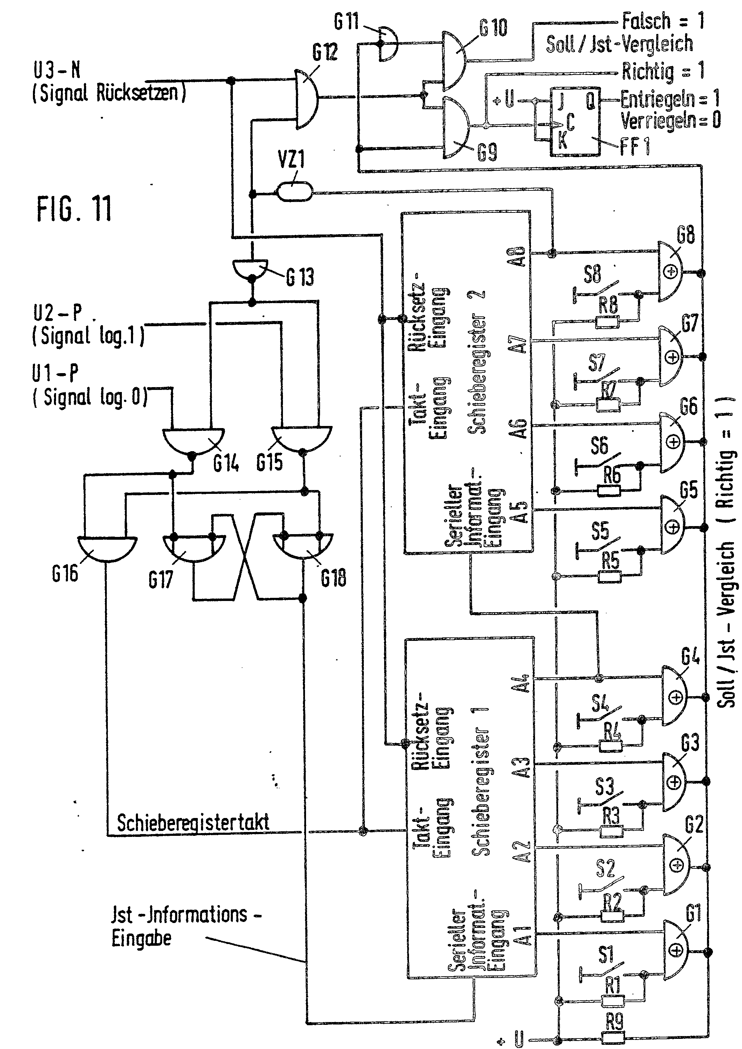

Fig. 11 zeigt eine Empfangsschaltung zum Vergleich der von dem Schlüsselkörper gelesenen Ist-Informationen mit vorgegebenen Soll-Informationen. Die Schaltung erhält an ihrem Eingang die Ausgangssignale der Schaltung gemäß Fig. 9. In einem flip-flop-G17/G18 werden die über NAND-Gatter G14, G15 zugeführten Ist-Information zwischengespeichert, anschließend seriell in zwei vierstufige Schieberegister 1 und 2 für somit acht duale Schlüsselinformationen eingelesen und nachfolgend parallel über acht EXOR-Gatter G1 bis G8 parallel mit den über Schalter S1 bis S8 eingegebenen Soll-Informationen verglichen. Hierzu werden die Ist-Informationen den ersten Eingängen der EXOR-Gatter zugeführt, während die Soll-Information am jeweiligen zweiten Eingang anliegt. Die zweiten Eingänge sind hierzu über Widerstände R1 bis R8 mit der Versorgungsspannung verbunden, liegen also bei geöffneten Schaltern S1 bis S8 auf dem Pegel log. 1 und können durch Schließen der Schalter S1 bis S8 auf das Bezugspotential und damit auf log. 0 gebracht werden. Ergibt der Soll/Ist-Vergleich Übereinstimmung, so liegt die gemeinsame Ausgangsleitung aller EXOR-Gatter G1 bis G8 auf log. 1, so daß das UND-Gatter G9, dem dieses Signal zugeführt wird, an seinem Ausgang die Information log. 1 mit der Bedeutung »Übereinstimmung« oder »richtig« liefert, da der zweite Eingang des UND-Gatters G9 von UND-Gatter G12 log. 1 erhält, da dessen beide Eingänge zu diesem Zeitpunkt ebenfalls auf log. 1 liegen. Hierzu erhält der eine Eingang von G12 die Spannung U3-N (vgl. Fig. 10a), der andere Eingang G12 ist mit dem log. 1 führenden Ausgang A8 des Schieberegisters 2 über eine Verzögerungsleitung VZ1 verbunden. Das Ausgangssignal des UND-Gliedes G9 wird gleichzeitig dem Takteingang eines J/K-flip-flops FF1 zugeführt, das damit den jeweiligen Schließzustand speichert und dessen Ausgangssignal die mechanische Sperrvorrichtung des Schlosses entweder auf »Verriegeln« oder »Entriegeln« steuert. Führt hingegen die gemeinsame Ausgangsleitung der EXOR-Gatter G1 – G8 wegen fehlender Übereinstimmung zwischen den ausgelesenen Ist-Informationen und den Soll-Informationen das Signal log. 0, bleibt das UND-Glied G9 gesperrt, hingegen wird über ein invertierendes Gatter G11 ein im übrigen zu dem UND-Gatter 9 parallel liegendes Gatter G10 durchlässig geschaltet, so daß an seinem Ausgang das Signal log. 1 mit der Bedeutung »keine Übereinstimmung« oder falsch« erscheint, das gegebenenfalls zur Auslösung von Alarmvorgängen benutzt werden kann. Das Ausgangssignal der Verzögerungsleitung VZ1 wird ferner über ein invertierendes Gatter G13 den jeweiligen ersten Eingängen von zwei NAND-Gliedern G14, G15 zugeführt, an deren jeweiligem zweiten Eingang die Spannungen U2-P (vgl. Fig. 10b) bzw. U1-P (vgl. Fig. 10c) anliegen und deren Ausgänge mit den Eingängen des flip-flops G17/G18 verbunden sind. Zur Gewinnung der Taktimpulse sind die Ausgänge der NAND-Glieder G14, G15 gleichzeitig mit den Eingängen eines UND-Gliedes G16 verbunden, dessen Ausgang mit den Takteingängen der Schieberegister 1 und 2 verbunden ist. Die beiden Rücksetzeingänge der Schieberegister erhalten das Signal U3-N (vgl. Fig. 10a).

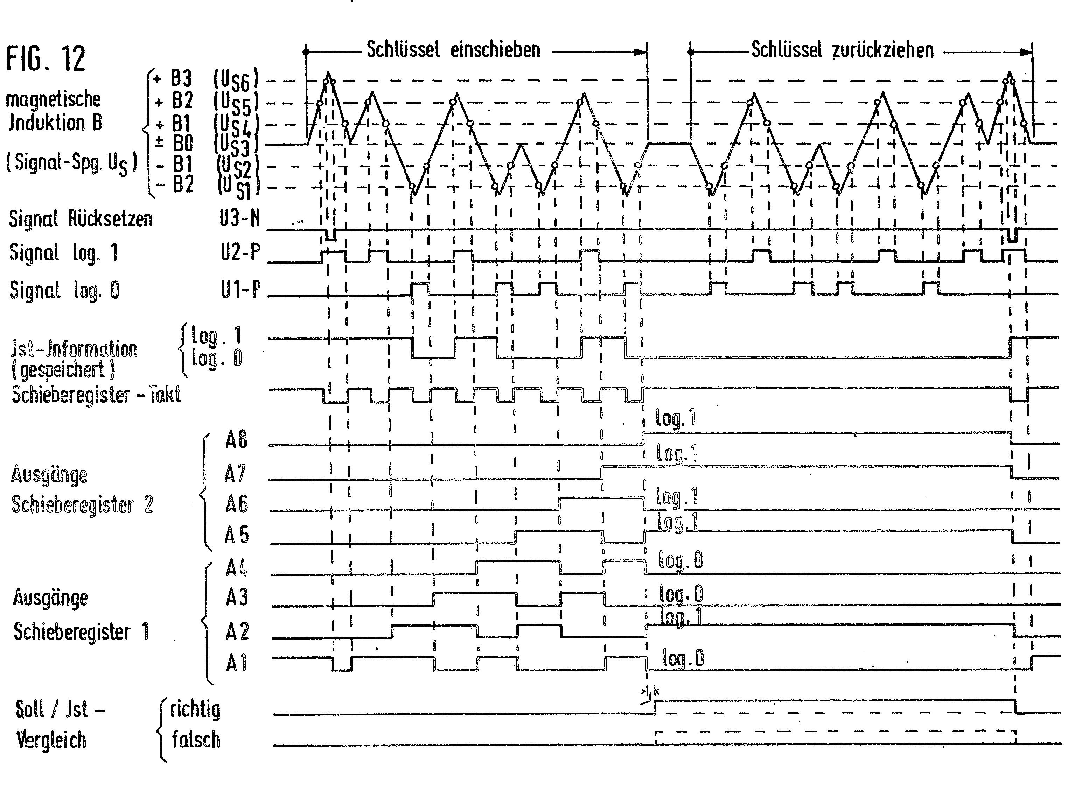

Fig. 12 zeigt in Diagrammform die beim Einschieben und Zurückziehen des Schlüsselkörpers erzeugte Signalspannung $U_S$ sowie den zugehörigen Verlauf der in den jeweiligen Diagrammzeilen angegebenen Spannungen in den Schaltungen nach den Fig. 9 und 11. Die Diagramme werden ergänzend wie folgt erläutert: beim Einstecken des Schlüssels in den Lesekopf wird durch die Informationsstelle I1 ein Rücksetzsignal U3 = log. 0 gebildet. Damit werden die Schieberegister 1, 2 an ihren Ausgängen A1 bis A8 auf log. 0 und das flip-flop-G17, G18 über das NAND-Gatter G15 auf log. 1 gesetzt. Die Nahtstellensignale, d. h. die Ausgangssignale der UND-Gatter G9, G10 werden durch den Ausgang A8 = log. 0 des Schieberegisters 2 sowie über G12 auf Null gehalten. Beim weiteren Einschieben des Schlüsselkörpers wird durch die erste Taktebene T1 die magnetische Induktion B durch den Hallgenerator auf Null gebracht. Hierdurch wird der Ausgang von G15 log. 1 und damit ebenfalls der Ausgang von G16. Die ansteigende Signalflanke stellt den ersten Taktimpuls für das Schieberegister dar, so daß die an dem seriellen Informationseingang des Schieberegisters 1 anstehende Ist-Information log. 1 zum Ausgang A1 weitergeschoben wird. Die durch die nächste Informationsstelle I2 hervorgerufene Induktion bleibt unter dem Rücksetzniveau B3. Mit Erreichen der nächsten Taktebene T2 erfolgt die nächste Ist-Informations-Eingabe, so daß im Schieberegister 1 nun an den Ausgängen A1 und A2 je eine log. 1 gespeichert ist. Die nächste Informationsstelle ist gemäß Fig. 12 log. 0. Sie führt zur Erzeugung des Signals U1-P = log. 1, da es über G14 das flip-flop G17, G18 so umsteuert, daß sich an seinem Ausgang das Signal log. 0 ergibt. Die nächste Taktebene T3 erzeugt einen weiteren Schiebetakt, so daß nunmehr im Schieberegister 1 der Zustand A1 = log. 0, A2 = log. 1, A3 = log. 1 vorliegt. Die nächste Informationsstelle I4 wird in analoger Weise im Schieberegister 1 abgespeichert. Zum seriellen Datentransport vom Schieberegister 1 zum Schieberegister 2 ist der Parallelausgang A4 des Schieberegisters 1 mit dem seriellen Informationseingang des Schieberegisters 2 verbunden. Nach Eingabe der letzten Ist-Information in den Schieberegisterspeicher befindet sich die zuerst eingegebene Ist-Information (log. 1) am Ausgang A8 des Schieberegisters 2 und gibt über das Verzögerungsglied VZ1, das die Laufzeit der EXOR-Gatter G1 bis G8 kompensiert, über das UND-Glied G12 die Entscheidung richtig/falsch durch die UND-Glieder G9, G10 frei. Gleichzeitig wird das Ausgangssignal von VZ1 über G13 in ein Sperrsignal für die NAND-Glieder G14, G15 invertiert, um eine weitere Informationseingabe bzw. eine Veränderung der Inhalte der Schieberegister zu verhindern. Die Nahtstellensignale (Ausgangssignale von G9 und G10) bleiben damit auch bei Zurückziehen des Schlüsselkörpers unbeeinflußt, bis mit Erreichen der Informationsstelle I1 die Schieberegister 1 und 2 durch die Spannung U3-N zurückgesetzt, d. h. deren Ausgänge A1 bis A8 auf log. 0 gesetzt und damit die Nahtstellensignale auf log. 0 gebracht werden. Die Verknüpfung des Ausgangssignals von VZ1 mit dem Rücksetzsignal U3-N über das UND-Gatter G12 verhindert, daß beim Rücksetzen unerwünschte Nadelimpulse am Ausgang G9 und G10 auftreten. Der Umstand, daß beim Herausziehen des Schlüssels im Moment des Rücksetzens der Schieberegister der Ausgang A1 des Schieberegisters 1 auf log. 1 gesetzt wird, ist unerheblich, da beim erneuten Einschieben des Schlüssels ein erneuter Rücksetzvorgang abläuft. Die erste Informationsstelle I1 ist also für den Rücksetzvorgang vorgesehen und steht für die individuelle Codierung nicht zur Verfügung.

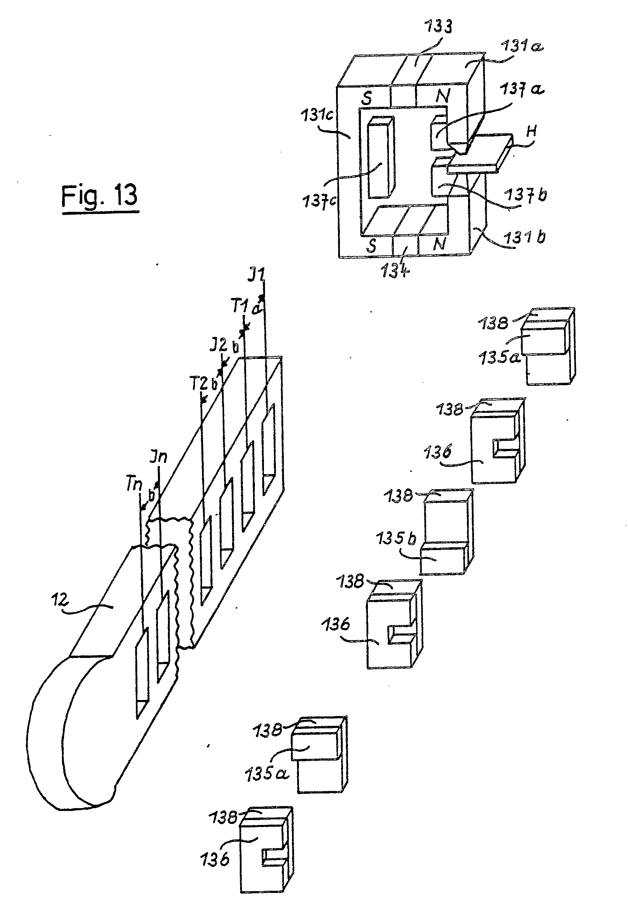

Fig. 13 zeigt einen Lesekopf mit Schlüssel in einer Ausführungsform ähnlich Fig. 1. Das ringförmig geschlossene Joch besteht aus Flußleitstücken 131a, 131b und 131c. Zur Erhöhung der Induktion im Hallgenerator nehmen die Querschnitte der Flußleitstücke 131a und 131b in Richtung auf den Hallgenerator ab. Zwei Permanentmagnete 133 und 134 sind symmetrisch zueinander mit gegeneinander gerichteten, gleichnamigen Polen angeordnet. Zur Konzentration des Magnetflusses auf die Codierstücke dienen auf die jeweiligen Flußleitstücke aufgesetzte, nach innen gerichtete Abfragestege 137a, 137b und 137c. Der Schlüsselkörper 12 aus magnetisch nicht leitendem Material weist einheitlich große Durchbrüche an den Informationsstellen I1 bis In und den Taktebenen T1 bis Tn auf. Wie im Fall der Fig. 1 ist der Abstand a von der ersten Informationsstelle zu der ersten Taktebene größer als die entsprechenden folgenden Abstände b. Die Durchbrüche im Schlüsselkörper 12 dienen zur Aufnahme von Trägerstücken 138 aus magnetisch nicht leitendem Material. Jedes Trägerstück ist mit einem Codierstück 135a, 135b oder 136 versehen, das aus magnetisch leitendem Material besteht. Die Codierstücke 135a, 135b haben grundsätzlich die gleiche Form. Das Codierstück 135a befindet sich jedoch auf der oberen Hälfte des Trägerstückes 138 und kennzeichnet durch seine Lage beispielsweise die Codeziffer log. 1; hingegen befindet sich das Codierstück 135b stets auf der unteren Hälfte des Codierstückes 138 und kennzeichnet die Codeziffer log. 0. Die Codierstücke 136 kennzeichnen die Taktebenen.

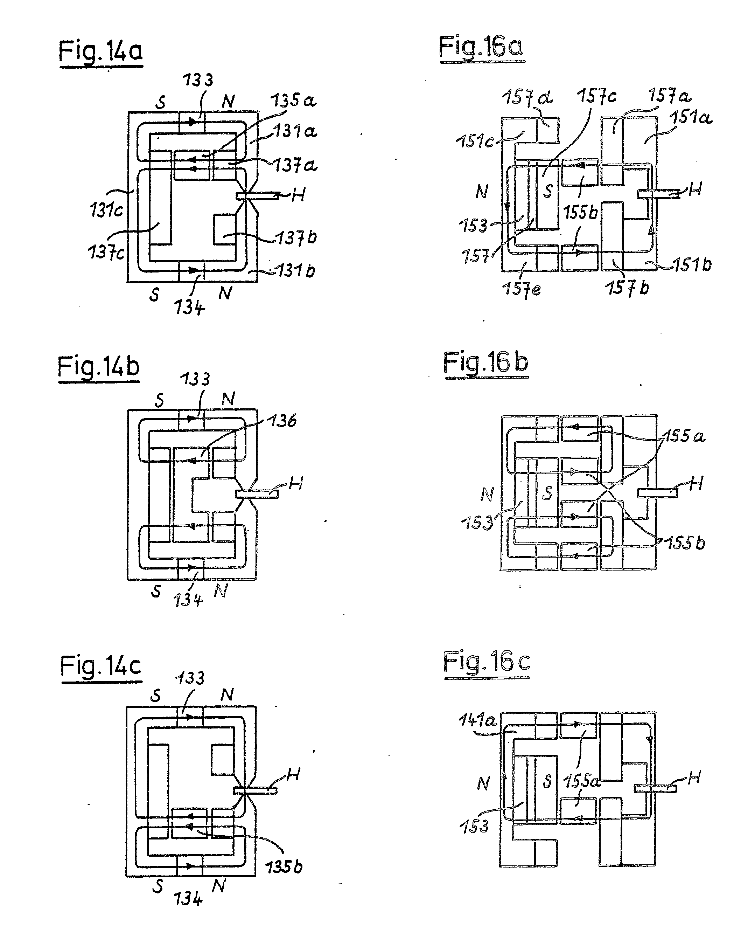

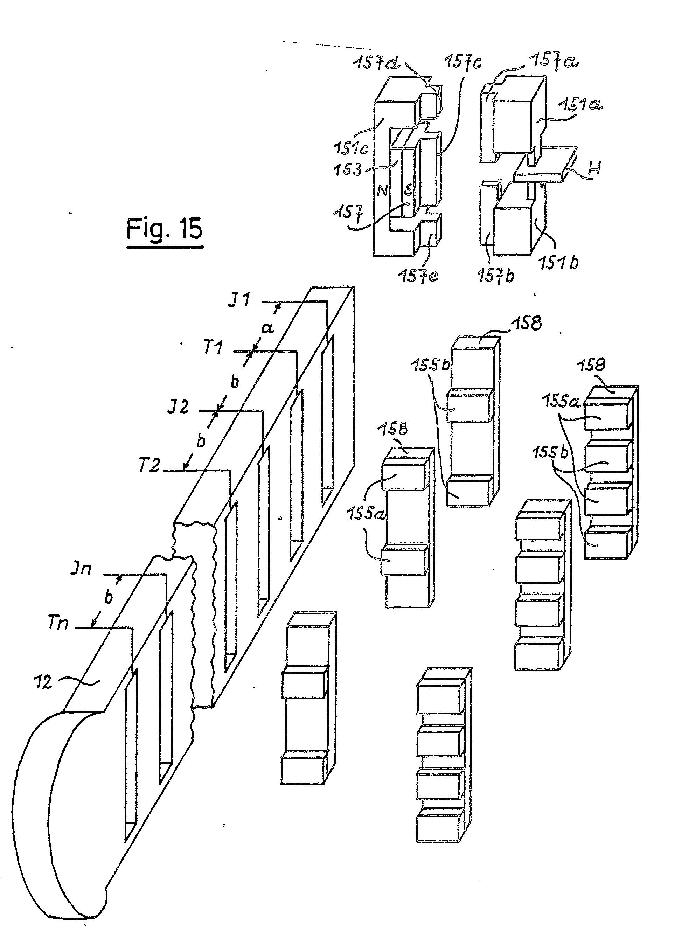

Der Schlüsselkörper wirkt in seinen einzelnen Stellungen mit dem Lesekopf gemäß den Fig. 14a, 14b, 14c zusammen, in denen der Einfachheit halber lediglich die jeweiligen Codierstücke unter Weglassung des Schlüsselkörpers und des Trägerstückes eingezeichnet sind. Analog zu den Fig. 2 bis 5 erzeugen die Codierstücke 135a und 135b in bezug auf den Hallgenerator H unsymmetrische Nebenschlüsse, die zu einer Induktion durch den Hallgenerator führen, deren Richtung die betreffende Codeziffer festlegt. Die Codestücke 136 für die Taktebenen erzeugen hingegen zwei symmetrische magnetische Nebenschlüsse, so daß in dem Hallgenerator keine Induktion auftritt.

Eine weitere Ausführungsform des Lesekopfes und des zugehörigen Schlüssels ist in Fig. 15 dargestellt. Der Hallgenerator befindet sich hier in einem Luftspalt zwischen zwei symmetrisch zu ihm angeordneten Flußleitstücken 151a, 151b, die jeweils mit Abfragestegen 157a, 157b versehen sind. In einem etwa der Breite (Dicke) des Schlüsselkörpers 12 entsprechenden Abstand hierzu ist ein U-förmiges weiteres Flußleitstück 151c angeordnet, auf dessen Stirnflächen sich wiederum dünne Abfragestege 157d, 157e befinden. In der Mitte des weiteren Flußleitstückes 151c ist ein Magnet 153 vorgesehen, dessen magnetische Achse in Richtung des gegenüberliegenden Hallgenerators weist. Zur Erhöhung der Flußkonzentration ist auf den Magneten 153 ein zu dem Luftspalt hin weisender Abfragesteg 157c angebracht. Der Schlüsselkörper entspricht weitgehend demjenigen nach Fig. 13. Die Ausnehmungen für die Informationsstellen und die Taktebenen sind zur Aufnahme von Trägerkörpern 158 bestimmt. Jeder der für die Informationsstellen vorgesehenen Träger 158 aus unmagnetischem Material trägt zwei Codierstücke, und zwar zur Kennzeichung einer Codeziffer log. 1 beispielsweise zwei Codierstücke 155a, zur Kennzeichnung einer Codeziffer log. 0 zwei Codierstücke 155b, die grundsätzlich untereinander gleich sein können und die jeweilige Codeziffer durch ihre Lage auf dem betreffenden Trägerstück definieren. Die für die Taktebenen vorgesehenen Trägerstücke 158 sind hingegen sowohl mit Codierstücken 155a als auch mit Codierstücken 155b besetzt.

In den Fig. 16a, 16b und 16c sind die sich durch die jeweilige Lage der Codierstücke ergebenden magnetischen Flüsse dargestellt, und zwar in Fig. 16a für den Teil einer Codeziffer log. 0, in Fig. 16b für eine Taktebene und in Fig. 16c für den Fall einer Codeziffer log. 1 Wie sich insbesondere durch einen Vergleich mit den Fig. 14a bis 14c ergibt, hat die Ausführungsform gemäß den Fig. 15, 16 den Vorteil, mit einem einzigen Magneten bei wenig größerem Aufwand für die Codierstücke auszukommen und unterscheidet sich von der Ausführungsform gemäß Fig. 13 in erster Linie dadurch, daß die Codierstücke keine magnetischen Nebenschlüsse in dem Joch des Lesekopfes erzeugen, sondern den magnetischen Kreis zwischen den beiden Jochhälften schließen. Auch hier wird die jeweilige Codeziffer dadurch erkannt, daß der magnetische Fluß durch den Hallgenerator H einmal in der einen, das andere Mal in der entgegengesetzten Richtung verläuft, während die Taktebenen infolge der zugehörigen, symmetrischen Anordnung der Codierstücke 155a und 155b zu keiner Induktion im Hallgenerator führen.

Während bei den bisher beschriebenen Ausführungsformen die jeweilige Codeziffer anhand der Richtung des Magnetflusses durch den Hallgenerator erkannt wurde und die Taktebenen durch die betreffenden Codierstücke verkörpert waren, wird bei den im folgenden beschriebenen Ausführungsformen die Codeziffer anhand der Höhe der Induktion im bzw. durch den Hallgenerator festgelegt, während die Taktebenen keine eigenen Codierstücke mehr im Schlüsselkörper erfordern, sondern nur dadurch charakterisiert werden, daß die Induktion durch den Hallgenerator auf einen Wert nahe 0 zurückgeht.

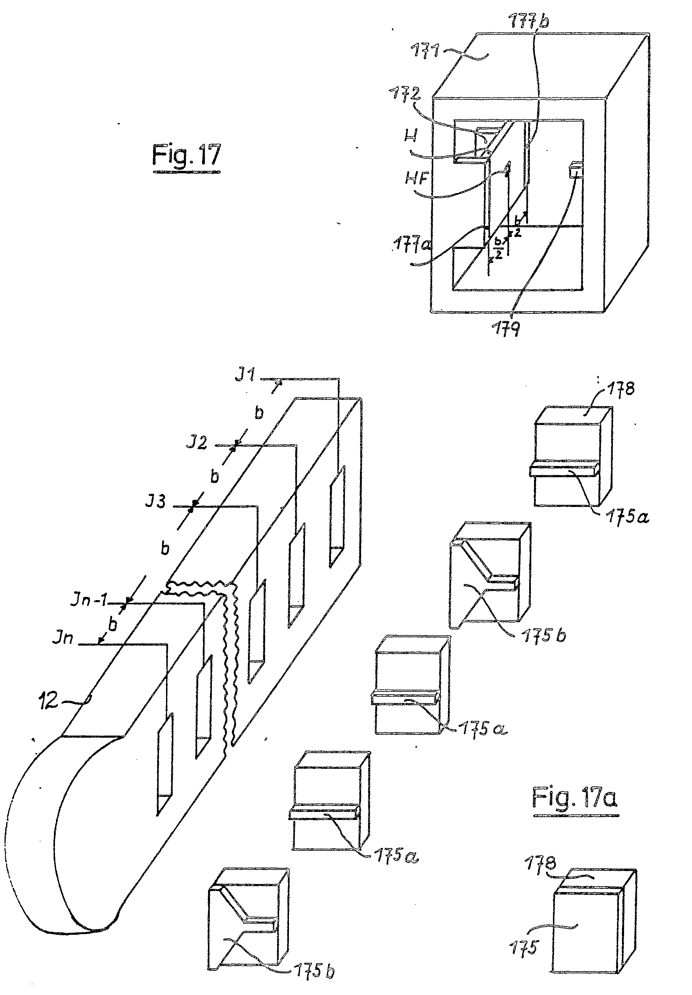

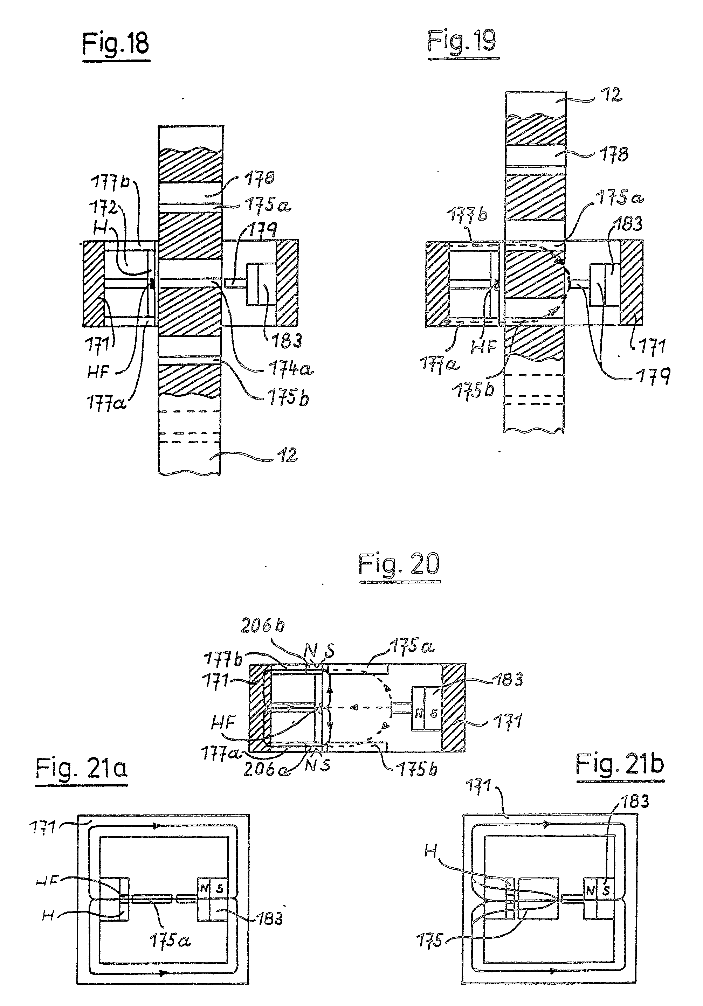

Eine erste derartige Ausführungsform ist in Fig. 17 dargestellt. Der Lesekopf umfaßt ein ringförmig umschlossenes Joch 171, dessen Breite etwa gleich dem gegenseitigen Abstand der Informationsstellen I1 bis In ist und das eine Ausnehmung zum Hindurchführen des Schlüsselkörpers 12 aus unmagnetischem Material aufweist. In der Mitte der einen Seite der Ausnehmung ist der Hallgenerator H mit seiner magnetfeldempfindlichen Fläche parallel zur Verschiebungsrichtung des Schlüsselkörpers 12 auf einem ihn mit dem benachbarten Jochschenkel verbindenden Abfragesteg 172 angeordnet. Die magnetempfindliche Fläche des Hallgenerators ist mit HF bezeichnet. Gegenüber dem Hallgenerator befindet sich ein Magnet 183 (vgl. Fig. 18), dessen magnetische Achse auf den Hallgenerator gerichtet ist und von dem in Fig. 17 lediglich ein Flußleitstück 179 zu erkennen ist, das zur Flußkonzentration dient. Auf dem Schlüsselkörper 12 folgen die Informationsstellen I1 bis In im Abstand b aufeinander. Der Schlüsselkörper 12 besitzt Ausnehmungen zur Aufnahme von Trägerkörpern 178 aus magnetisch nichtleitendem Material. Auf jeden Trägerkörper 178 ist ein Codierstück 175a oder 175 aufgesetzt. Das Codierstück 175a besitzt beidseits einen kleinen Stirnflächenquerschnitt und erzeugt dadurch eine hohe Induktion in dem Hallgenerator, die beispielsweise der Codeziffer log. 1 entsprechen möge. Das Codierstück 175b besitzt zumindest an seinem dem Hallgenerator H zugewandten Ende einen großen Stirnflächenquerschnitt, kann jedoch gemäß Fig. 17a auch an seinen beiden Enden einen großen Stirnflächenquerschnitt haben. Der große Stirnflächenquerschnitt führt zu einer entsprechend geringeren Induktion im Hallgenerator, die dann die Codeziffer log. 0 definiert. Beidseits der Hallgeneratorfläche HF sind im Abstand b/2 von dieser Ableitstege 177a, 177b angeordnet, deren Funktion noch erläutert werden wird.

Fig. 18 zeigt einen Querschnitt durch das Joch mit eingeschobenem teilweise geschnittenem Schlüssel. Man erkennt, daß der magnetische Fluß sich von dem Magnet 183 über dessen Flußleitstück 179, das gegenüberstehende Codestück 174a, die Hallgeneratorfläche HF, den anschließenden Abfragesteg 171 und das Joch schließt.

In Fig. 19 ist der Schlüsselkörper 12 um einen halben Schritt, d. h. den Abstand b/2, weiter eingeschoben. Das Codierstück 174a und das Codierstück 175b der darauffolgenden Informationsstelle liegen nun symmetrisch zu dem Hallgenerator und dessen magnetempfindlicher Fläche HF. Die Induktion im Hallgenerator ist in dieser Stellung praktisch gleich 0, da sich zwischen seiner magnetempfindlichen Fläche HF und dem Flußleitstück 179 der magnetisch nicht leitende Schlüsselkörper 12 befindet, während der Streufluß des Magneten 183 über die Codierstücke 175a, 175b und die ihnen jeweils gegenüberstehenden Ableitstege 177a und 177b abgeleitet wird. Grundsätzlich sind die Ableitstege 177a, 177b jedoch nicht notwendig, sie haben jedoch den Vorteil, mit kleineren Abständen b zwischen den Informationsstellen arbeiten zu können. Die Ableitstege können so breit gemacht werden, daß sie bis an den Abfragesteg heranreichen.

Eine weitere Verringerung der Abstände der Informationsstellen ist bei der Ausführungsform gemäß Fig. 20 möglich, die den gleichen Lesekopf wie die Fig. 18 und 19 zeigen, dessen Ableitstege 177a und 177b jedoch zusätzlich mit kleinen Kompensationsmagneten 206a, 206b versehen sind, die den Streufluß des Magneten 183 in der gezeichneten Stellung der Codierstücke 175a, 175b, der noch durch den Hallgenerator hindurchgeht, völlig kompensieren.

Fig. 21a zeigt eine Aufsicht auf das Magnetjoch 171 nach Fig. 17. Das Codierstück 175a konzentriert praktisch den gesamten Magnetfluß des Magneten 183 auf die magnetempfindliche Fläche HF des Hallgenerators H.

Fig. 21b zeigt das Joch in der gleichen Ansicht, jedoch mit dem Codierstück 175 der Fig. 17a zwischen dem Magneten und dem Hallgenerator. Wie angedeutet, wird die magnetempfindliche Fläche HF in diesem Fall nur von einem kleinen Teil des aus der Stirnfläche des Codierstückes 175 austretenden Flusses durchsetzt, so daß sich eine gegenüber dem Fall der Fig. 21a erheblich kleinere Induktion im Hallgenerator ergibt.

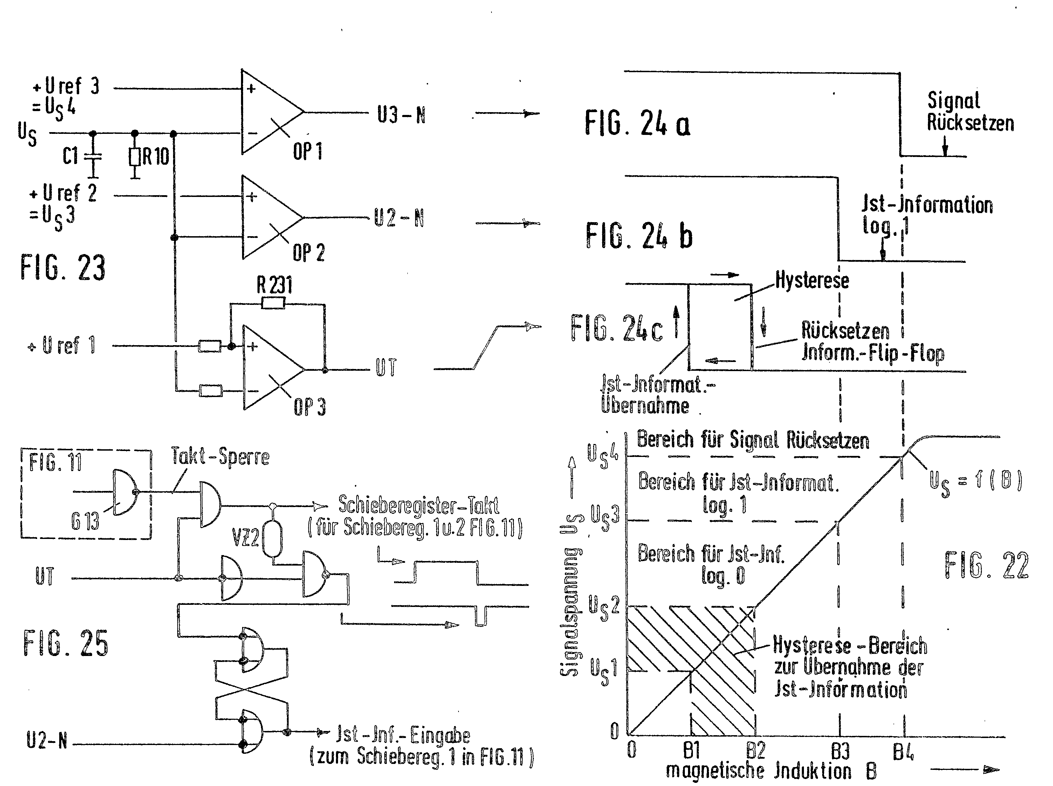

Fig. 22 zeigt für diesen Fall der Aussteuerung des Hallgenerators die Abhängigkeit der von diesem gelieferten Signalspannung US von der Induktion B. Das Diagramm entspricht weitgehend dem Diagramm der Fig. 8, lediglich mit dem Unterschied, daß der Hallgenerator nunmehr nur noch beginnend mit der Induktion $B = 0$ durchgesteuert wird.

Fig. 23 zeigt die Schaltung zur Gewinnung logischer Signalpegel aus der Signalspannung $U_S$. Diese Schaltung unterscheidet sich nur geringfügig von der entsprechenden Schaltung nach Fig. 9. Die Signalpegel am Ausgang der Operationsverstärker OP 1 bis OP 3 sind in den Fig. 24a, 24b und 24c dargestellt, die wiederum weitgehend den Fig. 10a bis 10c entsprechen. Da das Taktsignal UT nur bei Induktionswerten, die kleiner als der für die Codeziffer log. 0 festgelegte Bereich sind, gebildet wird, wird jedoch im Unterschied zu der Schaltung nach Fig. 9 nur noch ein Hysteresebereich benötigt, weshalb in Fig. 23 auch lediglich der Operationsverstärker OP 3 einen Mitkopplungswiderstand von seinem Ausgang auf seinen nichtinvertierenden Eingang besitzt.

Die von den Operationsverstärkern OP 1 bis OP3 abgegebenen, digitalen Spannungen können in der Schaltung nach Fig. 11, jedoch mit der in Fig. 25 dargestellten Änderung, verarbeitet werden. Die Gewinnung der benötigten Signalpegel ist jedoch dem Fachmann geläufig.

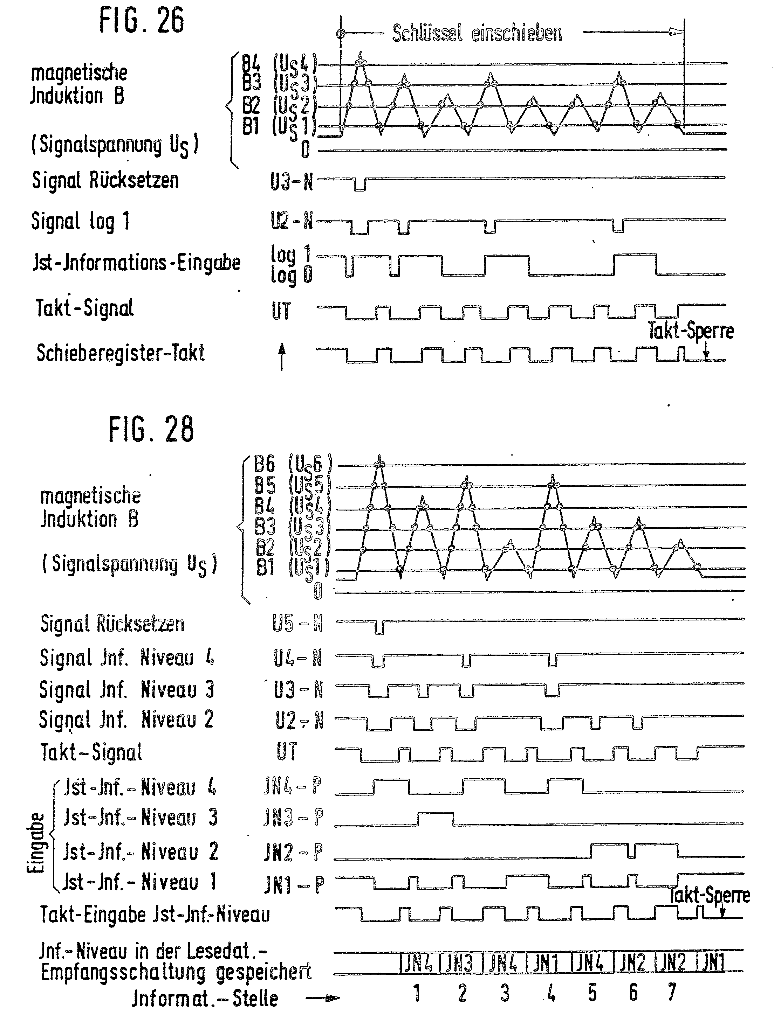

Das Diagramm in Fig. 26 zeigt den Verlauf der entsprechenden Spannungen beim Einschieben des Schlüsselkörpers in den Lesekopf.

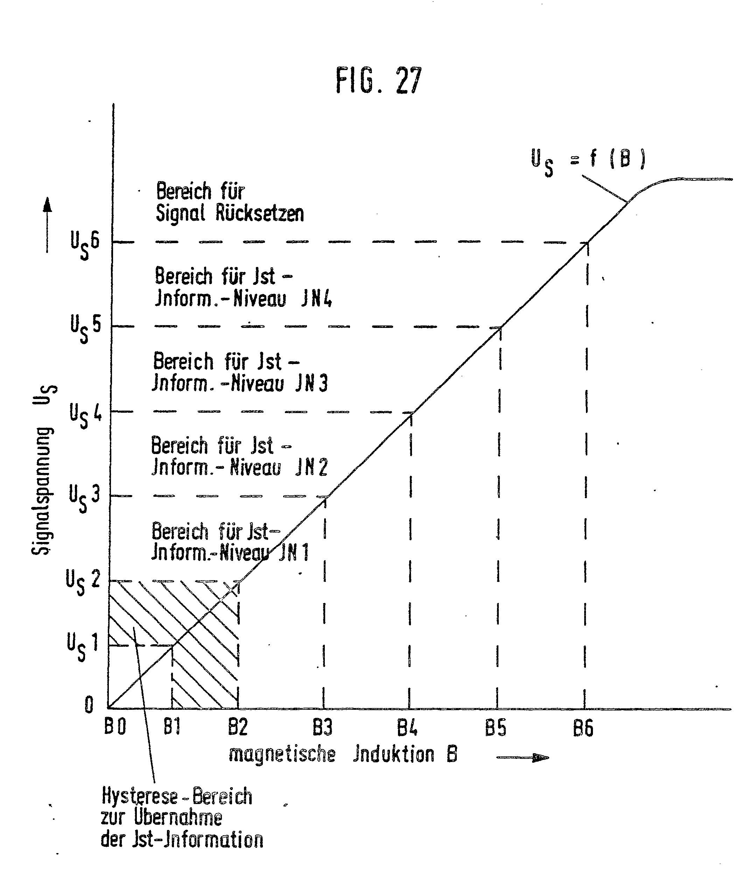

Bisher wurde angenommen, daß jede Informationsstelle in einem dualen Code codiert ist, also lediglich die Zustände bzw. Codeziffern log. 0 und log. 1 annehmen kann. Insbesondere die direkte Steuerung der Höhe der Induktion im Hallgenerator durch entsprechende Bemessung des Stirnflächenquerschnittes der Codierstücke bei der in Fig. 17 dargestellten Ausführungsform ermöglicht es jedoch, auch mit höherwertigen Codes zu arbeiten. Fig. 27 zeigt die Abhängigkeit der Signalspannung $U_S$ von der Induktion B im Hallgenerator für den Fall einer Codierung nach einem vierwertigen Code, bei dem jede Informationsstelle vier Informationsniveaus IN 1 bis IN 4 annehmen kann. Bei n Informationsstellen auf dem Schlüsselkörper erhält man hierdurch eine Erhöhung der Zahl unterschiedlicher Schlüsselinformationen, also des Verschlüsselungsgrades, um den Faktor $2^n$.

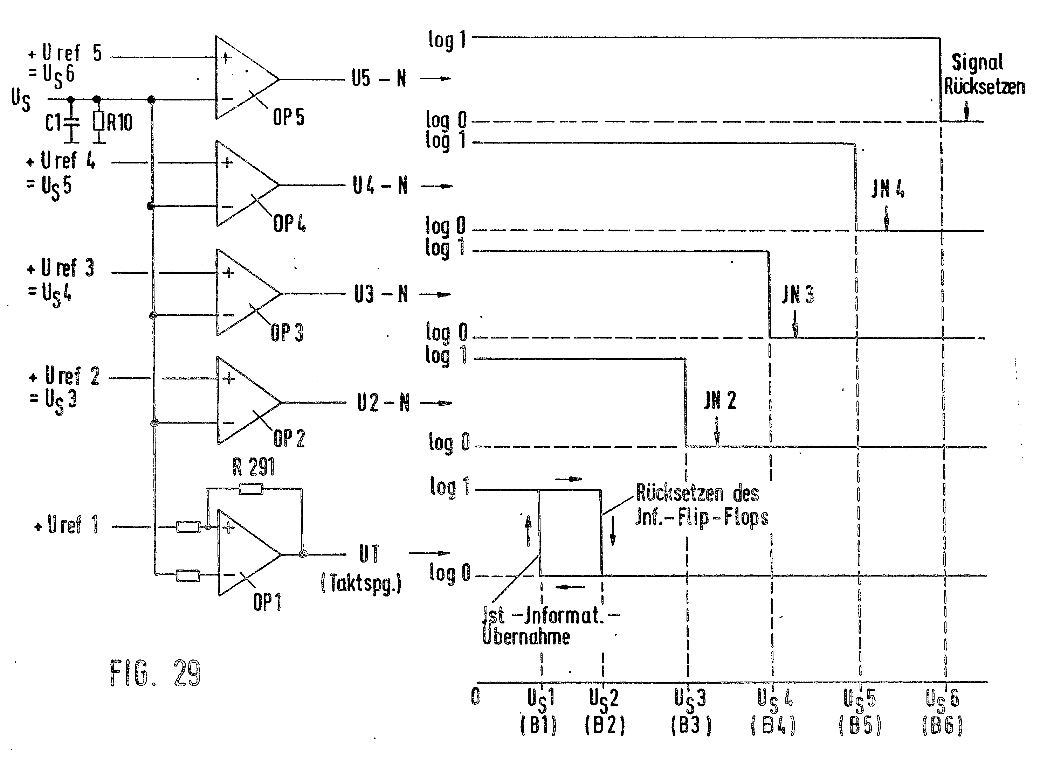

Fig. 28 zeigt im Diagramm den Verlauf der entsprechenden Spannungen am Ausgang des Hallgeneratorbausteins (Fig. 7) und in der Empfangsschaltung.

Fig. 29 zeigt die im wesentlichen die Operationsverstärker OP 1 bis OP 5 umfassende Schaltung zur Erzeugung digitaler Spannungspegel aus der analogen Signalspannung $U_S$. Wie im Fall der Fig. 23 ist lediglich der die Taktspannung UT zur Übernahme der jeweiligen Istinformation (Schlüsselinformation) liefernde Operationsverstärker OP 1 mit einem Mitkopplungswiderstand R 291 zur Gewinnung eines Hysteresebereiches beschaltet. Die neben den jeweiligen Operationsverstärkern angeordneten Signaldiagramme zeigen die Bewertung der Signalspannung $U_S$ zur Gewinnung der verschiedenen Informationsniveaus in digitaler Form.

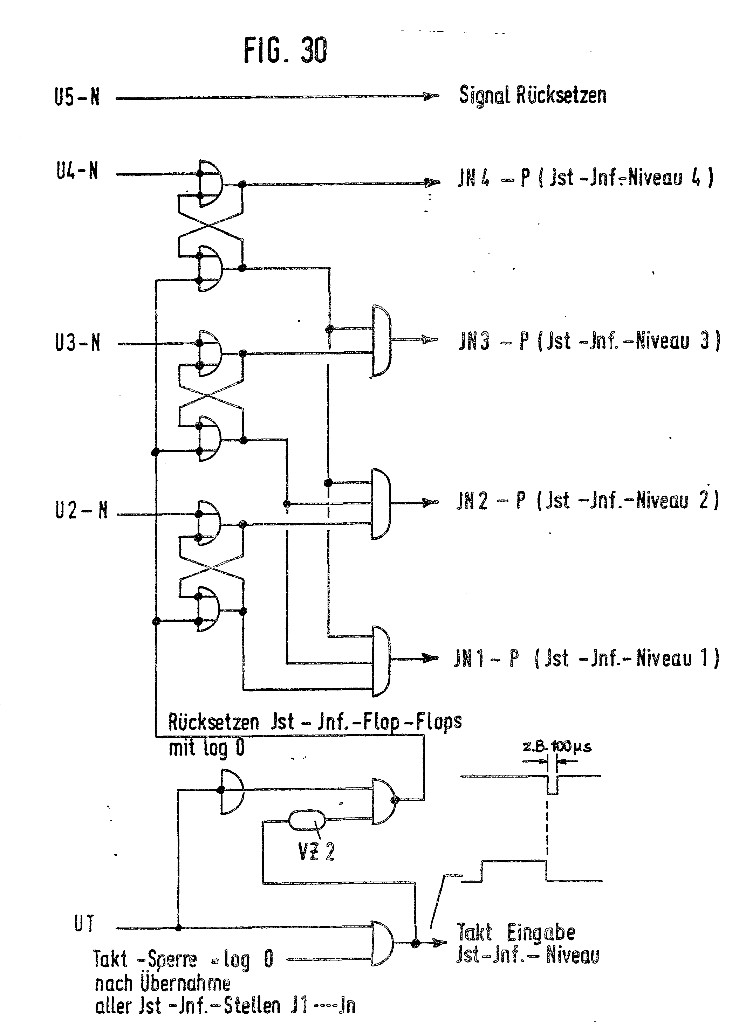

Die von den Operationsverstärkern OP 1 bis OP5 gelieferten Ausgangsspannungen können in der im wesentlichen flip-flops zur Zwischenspeicherung sowie UND-Gatter umfassenden Logikschaltung gemäß Fig. 30 für den nachfolgenden Istwert/Sollwert-Vergleich aufbereitet werden. Derartige Schaltungen sind dem Fachmann ebenfalls geläufig.

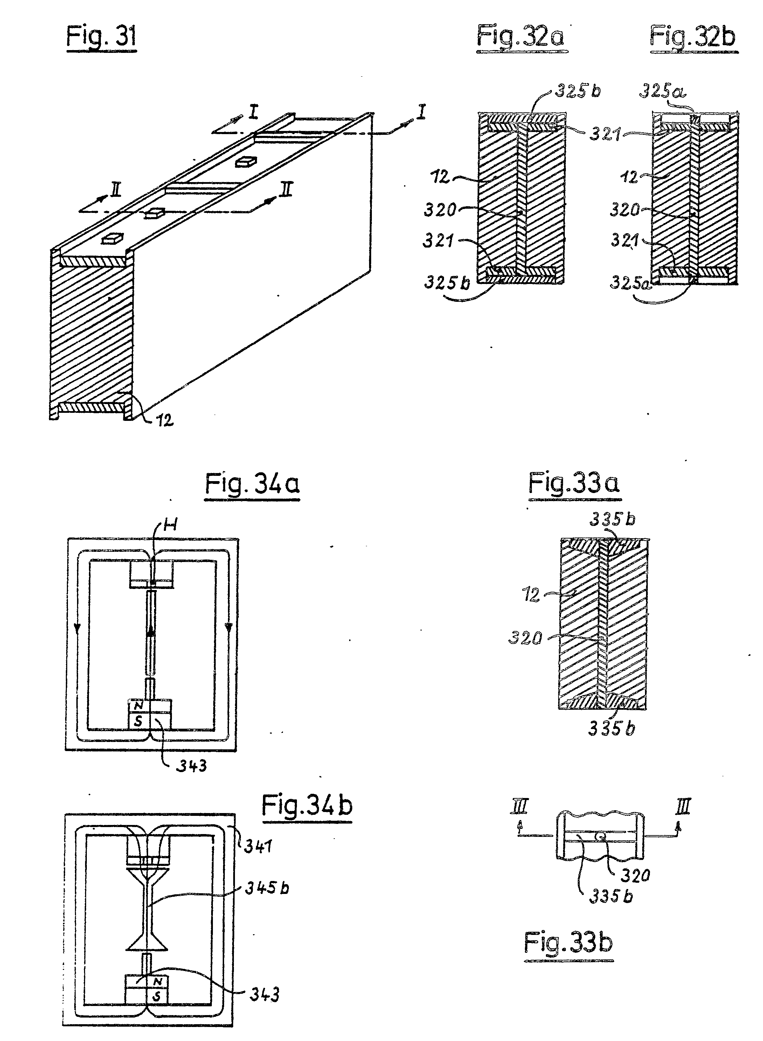

Der in Fig. 17 dargestellte Schlüsselkörper 12 rechteckigen Querschnittes kann auf seiner oberen und seiner unteren Schmalseite mit Einkerbungen zur gleichzeitigen Betätigung mechanischer Zuhaltungen eines Schlosses üblicher Bauart versehen werden. Soll eine derartige mechanische Codierung des Schlüsselkörpers jedoch an seinen breiten Seitenflächen beispielsweise in Form von Vertiefungen erfolgen, so können die Informationsstellen auch auf den beiden Schmalseiten angeordnet werden. Eine entsprechende Ausführungsform zeigt Fig. 31. In Fig. 32a ist ein Querschnitt durch diesen Schlüsselkörper längs der Linie I-I in Fig. 31 dargestellt. In Fig. 32b ist ein weiterer Schnitt durch diesen Schlüsselkörper längs der Linie II-II in Fig. 31 wiedergegeben. Bei dieser Ausführungsform wird der magnetische Fluß durch den Schlüsselkörper 12 aus unmagnetischem Material über einen dünnen Stab 320 aus magnetisch leitendem Material übertragen, um die Streuflüsse klein zu halten. Der Stab 320 endet an den beiden Schmalseiten des Schlüsselkörpers in je einer Trägerplatte 321. Auf der Trägerplatte ist zur Codierung von log. 0 ein streifenförmiges Codierstück 325b (Fig. 32a) oder zur Codierung von log. 1 ein kleines quadratisches Codierstück 325a (Fig. 32b) angeordnet. Eine weitere Ausführungsform eines derartigen Schlüsselkörpers ist in Fig. 33a im Schnitt und in Fig. 33b in der Aufsicht wiedergegeben. Zur Erzeugung der Codeziffer log. 0 wird hierbei der Stab 320 an seinen beiden Enden mit einer magnetisch leitenden Masse 335b kontaktiert. Für die Codierung der Codeziffer log. 1 ist lediglich der Stab 320 erforderlich. In den Ausführungsformen ab Fig. 31 sind die Informationsstellen auf den beiden sich gegenüberliegenden Schmalseiten des Schlüssels völlig symmetrisch zueinander. Man erhält auf diese Weise einen Wendeschlüssel, der sowohl in der gezeichneten Stellung wie in einer demgegenüber um 180° um seine Längsachse gedrehten Stellung in den Lesekopf eingeführt werden kann.

Einen solchen Lesekopf zeigen die Fig. 34a, 34b in vereinfachter Darstellung. Im Prinzip handelt es sich um den gleichen Lesekopf wie in Fig. 17, bestehend aus einem Joch 341, das auf seinem einen Schenkel den Hallgenerator H und auf seinem gegenüberliegenden Schenkel einen Magneten 343 trägt. Wie bei der Ausführungsform gemäß Fig. 17 sind ein Flußleitstück für den Magneten 343, ein Abfragesteg für den Hallgenerator H sowie Ableitstege zu beiden Seiten des Hallgenerators vorgesehen, die jedoch im einzelnen nicht bezeichnet bzw. in dieser Ansicht nicht zu erkennen sind. Im Fall einer Codeziffer log. 1 verläuft praktisch der gesamte magnetische Fluß des Magneten 343 über ein Codierstück 345a, das dem Stab 320 entsprechen kann, durch den Hallgenerator H hindurch (Fig. 34a). Im Fall einer Codeziffer log. 0 verläuft hingegen nur ein Teil des magnetischen Flusses durch den Hallgenerator H, da das entsprechende Codierstück 345b, das im einzelnen gemäß Fig. 33a ausgebildet sein kann, einen großen Stirnflächenquerschnitt besitzt und eine dementsprechend geringere Induktion in dem Hallgenerator H erzeugt.

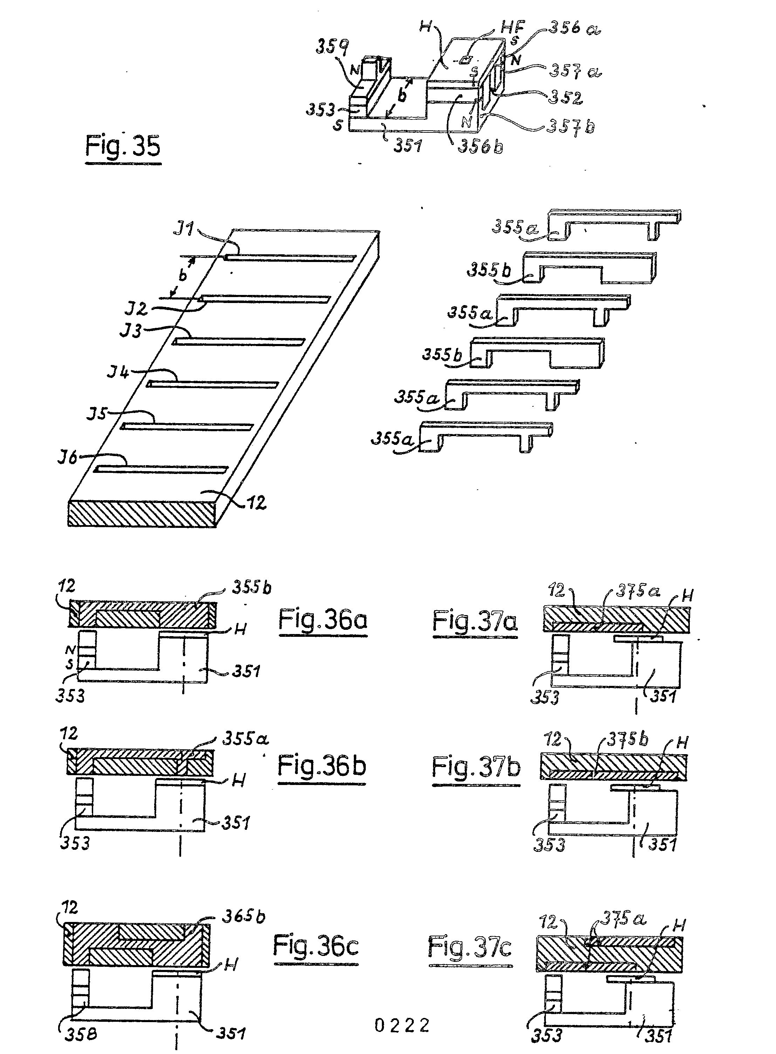

Fig. 35 zeigt eine weitere Ausführungsform des Lesekopfes und des Schlüsselkörpers. Der Lesekopf besteht aus einem annähernd U-förmigen Joch 351, dessen Breite b etwa gleich dem gegenseitigen Abstand der Informationsstellen l1 bis l6 auf dem Schlüsselkörper 12 ist und dessen einer Schenkel einen Magneten 353 mit rechtwinklig zu der Ebene des Querschenkels verlaufender, magnetischer Achse aufweist. Auf dem anderen Schenkel des Joches 351 sitzt mittig ein Abfragesteg 352, der den Hallgenerator H mit seiner magnetfeldempfindlichen Fläche HF parallel zur Verschieberichtung des Schlüsselkörpers 12 trägt. Zu beiden Seiten des Abfragesteges 352 sind wiederum Ableitstege 357a, 357b mit Kompensationsmagneten 356a, 356b angeordnet. Jede Informationsstelle wird durch eine schlitzförmige Ausnehmung gebildet, die ein annähernd U-förmiges, magnetisch leitendes Codierstück 355a oder 355b aufnehmen kann. Die Codierstücke 355a erzeugen infolge des kleinen Stirnflächenquerschnittes ihres kurzen, über der magnetfeldempfindlichen Fläche HF des Hallgenerators H endenden Stirnfläche eine hohe Induktion, die beispielsweise die Codeziffer log. 1 bedeuten kann. Hingegen erzeugen die Codierstücke 355b infolge des großen Stirnflächenquerschnittes ihres dem Hallgenerator gegenüberliegenden Schenkels eine niedrige Induktion, die dann die Codeziffer log. 0 bedeutet.

Fig. 36a zeigt einen Schnitt durch den Schlüsselkörper 12 an einer die Codeziffer log. 0 erzeugenden Informationsstelle.

Fig. 36b zeigt einen Schnitt durch den Schlüsselkörper 12 an einer die Codeziffer log. 1 erzeugenden Informationsstelle.

Fig. 36c zeigt einen ähnlichen Schnitt wie Fig. 36a, jedoch mit umschlagsymmetrischer Ausbildung des betreffenden Codierstückes 365b für eine Codeziffer log. 0. Das Codierstück für eine Codeziffer log. 1 kann in gleicher Weise umschlagsymmetrisch ausgebildet werden. Man erhält auf diese Weise einen Wendeschlüssel.

Statt der annähernd U-förmigen Codierstärke können auch streifenförmige Codierstücke verwendet werden. Diese Ausführungsform ist in den Fig. 37a bis 37c dargestellt. Der Lesekopf entspricht dabei im wesentlichen dem in Fig. 35 dargestellten, jedoch ist der Hallgenerator H mit seiner hallempfindlichen Fläche nicht mehr mittig auf seinem in dieser Ansicht nicht sichtbaren Abfragesteg sondern in Richtung auf den Magneten 353 versetzt angeordnet, wie durch die strichpunktierte Linie angedeutet. In Fig. 37a ist ein Codierstück 375a zur Erzeugung einer Codeziffer log. 1 wiedergegeben. Fig. 37b zeigt ein Codierstück 375b zur Erzeugung einer Codeziffer log. 0. Man erkennt, daß durch die außermittige Anordnung des Hallgenerators erreicht wird, daß im Fall der Fig. 37a praktisch der gesamte magnetische Fluß durch die magnetempfindliche Fläche des Hallgenerators hindurchverläuft, während im Fall der Fig. 37b ein erheblicher Teil des magnetischen Flusses an dem Hallgenerator vorbei über den freien Bereich dessen Abfragesteges verläuft.

Fig. 37c zeigt eine Ausführungsform mit umschlagsymmetrischer Anordnung von zwei Codierstücken 375a im Schlüsselkörper 12, wodurch man einen Wendeschlüssel erhält.

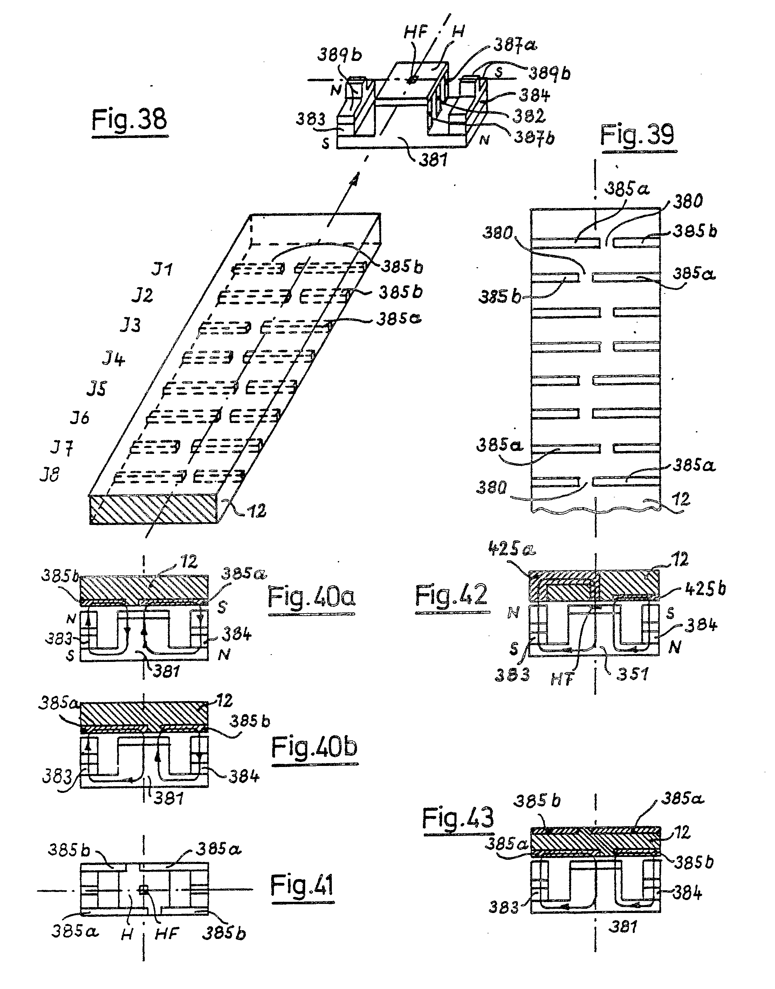

Fig. 38 zeigt eine Abwandlung der Ausführungsform von Lesekopf und Schlüsselkörper nach Fig. 35. Der Lesekopf umfaßt ein annähernd U-förmiges Joch 381, dessen Breite etwa gleich den gegenseitigen Abstand der Informationsstellen l1 bis l8 auf dem Schlüsselkörper 12 aus unmagnetischem Material ist. Jeder Schenkel des Joches 381 trägt einen Magneten 383 bzw. 384. In der Mitte des Querschenkels des Joches sitzt auf einem Abfragesteg 382 der Hallgenerator H mit zur Verschieberichtung des Schlüsselkörpers paralleler magnetempfindlicher Fläche HF. Beidseits des Abfragesteges 382 sind Ableitstege 387a, 387b angeordnet. Die beiden Magnete 383 und 384 sind gegensinnig gepolt und tragen oberseitig jeweils Flußleitstücke 389a bzw. 389b. Bei dieser Ausführungsform besteht jede Informationsstelle aus zwei Codierstücken 385a, 385b unterschiedlicher Länge, zwischen denen eine Trennstelle 380 liegt (Fig. 39).

Fig. 40a zeigt eine Ansicht des Lesekopfes mit im Bereich einer Informationsstelle, z. B. der Informationsstelle l1, geschnittenem Schlüsselkörper 12. Man erkennt, daß das Codierstück 385a den Magnetfluß des Magneten 384 in der eingezeichneten Richtung über die magnetempfindliche Fläche des Hallgenerators schließt, während das Codierstück 385b den Magnetfluß des Magneten 383 über den neben der magnetempfindlichen Fläche des Hallgenerators liegenden Teil dessen Abfragesteges schließt. Die beiden Magnetflüsse verlaufen gegensinnig. Der gezeichneten Richtung des Magnetflusses durch die magnetempfindliche Fläche des Hallgenerators kann die Codeziffer log. 1 zugeordnet werden.

Die Codeziffer log. 0 erhält man dann gemäß der Darstellung in Fig. 40b durch Vertauschung der Codierstucke 385a und 385b. Über das Codierstück 385a schließt sich dann der Magnetfluß des Magneten 383 durch den Hallgenerator hindurch, jedoch in umgekehrter Richtung wie im Fall der Fig. 40a. Der Magnetfluß des Magneten 384 schließt sich hingegen über das Codierstück 385b im wesentlichen über den freien Bereich des Abfragesteges. Die Codeziffern werden also bei diesem Ausführungsbeispiel anhand der Richtung des magnetischen Flusses durch den Hallgenerator unterschieden, so daß die Signalauswertung mit der Schaltung nach den Fig. 9 und 11 erfolgen kann.

Fig. 41 zeigt eine Aufsicht auf den Lesekopf, wobei sich die Codierstücke aufeinanderfolgender Informationsstellen des hier weggelassenen Schlüsselkörpers in der die Taktebene festlegenden bzw. den Taktimpuls erzeugenden Stellung, nämlich in Deckung mit den in der Aufsicht nicht sichtbaren Ableitstegen 387a, 387b (Fig. 38) befinden.

Fig. 42 zeigt, daß sich durch eine etwa U-förmige Ausbildung des Codierstückes 425a eine noch stärkere Konzentration des Flusses auf die magnetempfindliche Fläche HF des Hallgenerators erzeugen und damit die Induktion im Hallgenerator entsprechend erhöhen läßt.

Fig. 43 zeigt, daß auch bei dieser Ausführungsform eine umschlagsymmetrische Anordnung der Codierstücke zur Erzielung eines wendbaren Schlüssels möglich ist.

Bei allen bisher beschriebenen Ausführungsformen wurden die Codierstellen im Schlüssel durch Codierstücke aus weichmagnetischem Material gebildet. Grundsätzlich können jedoch bei allen Ausführungsformen die Informationsstellen auch aus kleinen Permanentmagneten oder magnetisierten Bereichen im Schlüsselkörper bestehen. Es entfallen dann der oder die entsprechenden (Haupt-)Magnete im Lesekopf.

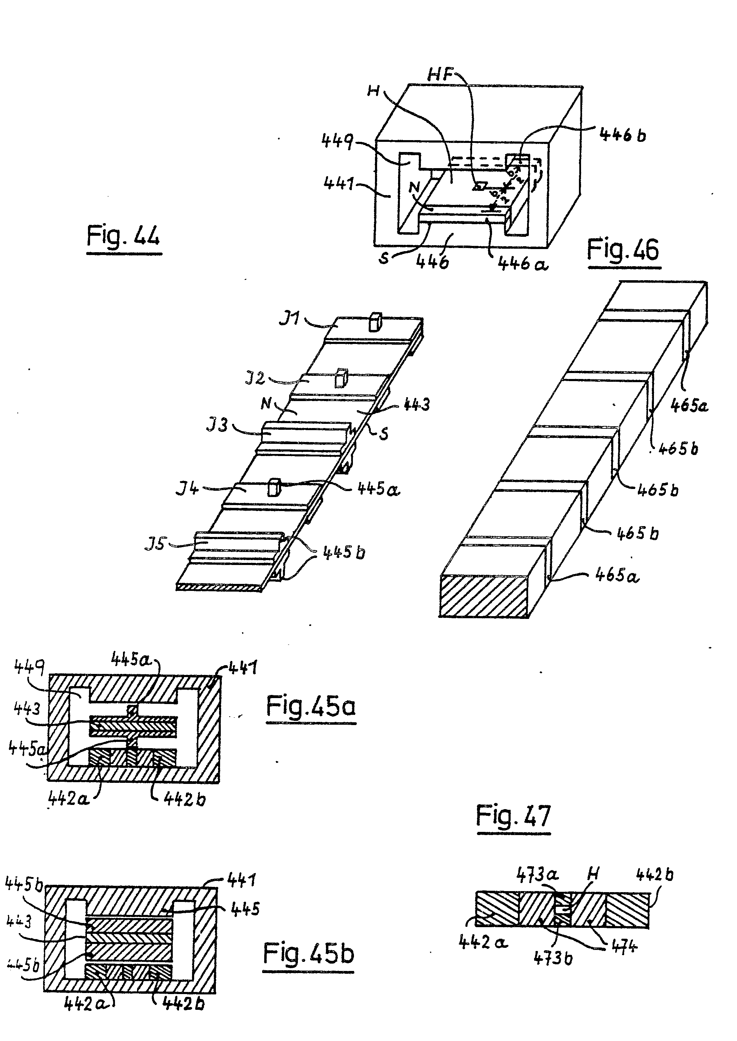

Fig. 44 zeigt eine derartige Ausführungsform, bei der der Lesekopf aus einem ringförmig geschlossenen Joch 441 besteht, dessen Breite in Verschiebungsrichtung des Schlüsselkörpers etwa gleich dem gegenseitigen Abstand der Informationsstellen ist und der eine zentrale Ausnehmung zum Hindurchführen des Schlüsselkörpers aufweist. In der Mitte der einen Seite dieser Ausnehmung sitzt der Hallgenerator H mit seiner magnetempfindlichen Fläche HF parallel zur Verschieberichtung des Schlüsselkörpers auf einem ihn mit dem benachbarten Jochschenkel verbindenden Abfragesteg, der durch den Hallgenerator verdeckt ist. Auf der gegenüberliegenden Seite der Ausnehmung befindet sich ein Flußleitstück 449. Der Schlüsselkörper umfaßt einen flachen Magneten 443, auf den an den Informationsstellen I1 bis I5 beidseits Flußleitstücke 445a, 445b aufgesetzt sind. Der Stirnflächenquerschnitt der Flußleitstücke bestimmt wie in den vorhergehenden Ausführungsbeispielen die Höhe der Induktion im Hallgenerator und legt damit die jeweilige Codeziffer fest. Grundsätzlich genügt es, lediglich den Stirnflächenquerschnitt des jeweils dem Hallgenerator gegenüberstehenden Flußleitstückes entsprechend auszulegen.

Eine symmetrische Ausbildung ist jedoch zu bevorzugen, da man dann einen Wendeschlüssel erhält. Statt eines durchgehenden Magneten 443 kann auch ein magnetisiertes Material verwendet werden, das lediglich im Bereich der Informationsstellen permanent magnetisiert ist. Der aus dem Magneten 443 und den Flußleitstücken 445a, 445b unterschiedlichen Stirnflächenquerschnittes bestehende Schlüsselkörper kann in unmagnetisches Material eingebettet werden (nicht dargestellt), um glatte Oberflächen zu erhalten. Die Art der Flußsteuerung zur Erzielung einer Codeziff. log. 1 bzw. log. 0 ist aus den Schnitten gemäß den Fig. 45a bzw. 45b zu erkennen. Zur Erzielung geringer Abstände der Informationsstellen sind gemäß Fig. 44 beidseits der magnetempfindlichen Fläche HF im Abstand b/2 Ableitstege 446 mit Kompensationsmagneten 446a, 446b angeordnet.

Fig. 46 zeigt eine Abwandlung des für den Lesekopf gemäß Fig. 44 verwendbaren Schlüsselkörpers. Dieser besteht hier aus einem magnetisierbaren Material, das im Bereich der Informationsstellen entsprechend der jeweiligen Codeziffer stärker oder schwächer permanent magnetisiert ist, wodurch sich die Codierstücke 465a bzw. 465b ergeben.

Fig. 47 zeigt im Schnitt im vergrößerten Maßstab einer Ausführungsform des den Hallgenerator H enthaltenden Bereiches des Lesekopfes mit dem in den Fig. 45a, 45b bereits angedeuteten Aufbau. Während bisher angenommen wurde, daß der Hallgenerator, dessen magnetempfindliche Fläche äußerst klein ist (z. B. 100 µm × 100 µm) Bestandteil eines plattenförmigen Hallgeneratorbausteines entsprechend Fig. 7 ist, der im übrigen aus unmagnetischem Material besteht und eine nicht zu vernachlässigende Dicke hat, ist der Hallgenerator H in der Ausführungsform gemäß den Fig. 45a, 45b und 47 praktisch luftspaltfrei zwischen zwei Flußleitplättchen 473a, 473b eingebettet, die zusammen den Abfragesteg bilden. Dieser Abfragesteg ist seinerseits in unmagnetisches Material 474 eingebettet, das beispielsweise in integrierter Form die Schaltungen gemäß Fig. 7 für die Konstantstromspeisung des Hallgenerators und für die Verstärkung dessen Ausgangssignals enthalten kann. Diese Anordnung sitzt zwischen zwei Ableitstücken 442a, 442b aus magnetischleitendem Material, die stabförmig ausgebildet sind und parallel zur Verschieberichtung des Schlüsselkörpers verlaufen. Die Ableitstücke übernehmen einen Teil des aus einem Codierstück mit großem Stirnflächenquerschnitt (z. B. 445b in Fig. 44) austretenden magnetischen Flusses, wodurch sich eine entsprechend geringere Induktion über die Flußleitplättchen 473a, 473b durch den Hallgenerator H ergibt.

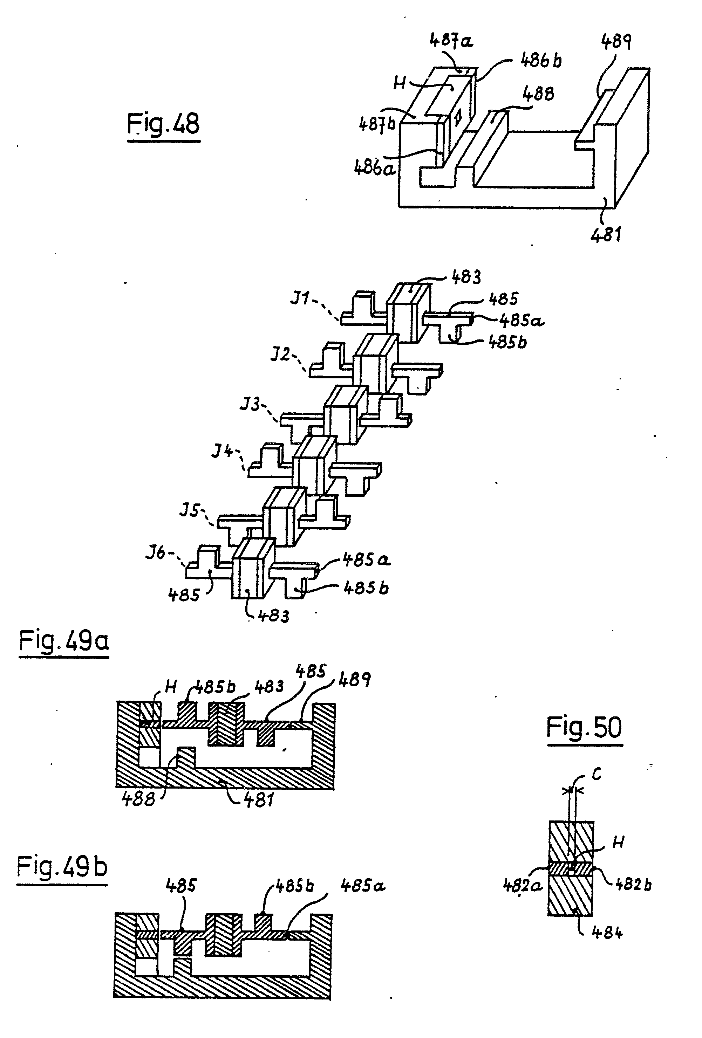

Fig. 48 zeigt eine weitere Ausführungsform des Lesekopfes und des Schlüsselkörpers, von dem wiederum lediglich seine Ausbildung an den Informationsstellen I1 bis I6 gezeichnet ist. Der Lesekopf besteht aus einem annähernd U-förmigen Joch 481, dessen Breite gleich dem gegenseitigen Abstand der Informationsstellen I1 bis I6 ist. Der eine Schenkel des Joches trägt den Hallgenerator H, der auch gemäß Fig. 47 ausgebildet sein kann, mit zur Verschieberichtung paralleler, magnetempfindlicher Fläche.

Beidseits des Hallgenerators sind wiederum Ableitstege 487a, 487b mit Kompensationsmagneten 486a, 486b angeordnet. Der Querschenkel des Joches 481 trägt einen weiteren, parallel zur Verschieberichtung verlaufenden Ableitsteg 488. Auf dem gegenüberliegenden Schenkel des Joches befindet sich gegenüber dem Hallgenerator ein Flußleitstück 489. Jede Informationsstelle I1 bis I8 umfaßt einen Magneten 483 mit beidseits aufgesetzten Flußleitstücken 485. Jedes der stabförmigen Flußleitstücke besitzt eine kleine, mit dem Hallgenerator H bzw. dem gegenüberliegenden Flußleitstück 489 zusammenwirkende Stirnfläche 485a, sowie einen rechtwinklig zu seiner Achse verlaufenden Lappen mit einer Stirnfläche 485b, die zweckmäßigerweise größer als die Stirnfläche 485a ist.

Die Schnittdarstellungen der Fig. 49a und 49b zeigen, daß der magnetische Fluß des Magneten 483 über das Flußleitstück 485 und das gegenüberliegende Flußleitstück 489 durch das Joch 481 verläuft und sich je nach Stellung der Stirnfläche 485b des anderen Flußleitstückes entweder gemäß Fig. 49a über den Hallgenerator oder gemäß Fig. 49b über den Ableitsteg 488 schließt. Im ersteren Fall ergibt sich eine hohe Induktion im Hallgenerator, im letzteren Fall eine geringere Induktion. Das jeweils dem Hallgenerator zugewandte Flußleitstück 485 bildet also das Codierstück, das je nach Lage seiner Stirnfläche 485b in bezug auf den Ableitsteg 488 entweder die Codeziffer log. 0 oder die Codeziffer log. 1 bedeutet. Die punktsymmetrische Anordnung der Flußleitstücke 485 in bezug auf den Magneten 483 hat den Vorteil, daß der Schlüssel wendbar ist. Unter Inkaufnahme etwas größerer Streuflüsse kann anstelle der Einzelmagneten 483 entweder ein durchgehender, plattenförmiger Magnet oder, zur Erzielung geringerer Streuflüsse, eine durchgehende Platte aus magnetisierbarem Material, das lediglich an den Informationsstellen permanent magnetisiert ist, verwendet werden.

Fig. 50 zeigt ähnlich wie Fig. 47 eine verbesserte Ausführungsform des den Hallgenerator enthaltenden Bereiches des Lesekopfes im Schnitt. Der Hallgenerator H mit der Dicke c ist zwischen zwei die Rolle des Abfragesteges spielende Flußleitplättchen 482a, 482b eingebettet, die ihrerseits in unmagnetischem Material 484 liegen.

**Patentansprüche**

1. Mit einem Schlüssel zu betätigendes Schloß, das einen Lesekopf aus einem ringförmig geschlossenen Joch mit einem in einem Luftspalt angeordneten Hallgenerator (H) umfaßt, dessen magnetisch lesbare Induktion sich in Abhängigkeit von der Stellung des längs seiner Achse aufeinanderfolgende, einen mindestens zweiwertigen (dualen) Code bildende magnetische Informationsstellen (J1, J2) tragenden Schlüssels ändert und dessen von dem Augenblickswert der Induktion abhängige Signalspannung eine Empfangsschaltung mit gespeicherten Sollinformationen vergleicht und bei Übereinstimmung die mechanische Sperrvorrichtung des Schlosses betätigt, dadurch gekennzeichnet, daß das Joch eine zentrale Öffnung zum Hindurchschieben des Schlüsselkörpers (12) begrenzt und aus Flußleitstücken (11a, 11b, 11c) sowie zwei in bezug auf den Hallgenerator (H) symmetrisch angeordneten Magneten (13, 14) besteht, deren Magnetflüsse sich vor Einführen des Schlüsselkörpers (12) aufheben, daß jede Informationsstelle (J1, J2) aus einem magnetisch leitenden Codierstück (15a, 15b) besteht, das beim Hindurchführen des Schlüsselkörpers (12) durch die zentrale Öffnung einen in bezug auf den Hallgenerator (H) unsymmetrischen magnetischen Nebenschluß herstellt, daß die Lage des jeweiligen Nebenschlusses in bezug auf den Hallgenerator (H) die Richtung des magnetischen Flusses durch den Hallgenerator steuert und die jeweilige Codeziffer der zugehörigen Informationsstelle definiert und daß auf jede Informationsstelle (J) eine magnetisch lesbare Taktebene (T) folgt, die die Verarbeitung der von dem Hallgenerator (H) in dem Lesekopf zuvor ausgelesenen Informationsstelle in der Empfangsschaltung steuert (Fig. 1 bis 5).

2. Schloß nach Anspruch 1, dadurch gekennzeichnet, daß jede Taktebene (T1, T2) durch zwei Codierstücke (15a, 15b) im Schlüsselkörper (12) gebildet ist, die zwei in bezug auf den Hallgenerator (H) symmetrische Nebenschlüsse in dem Joch erzeugen (Fig. 3, 5).

3. Schloß nach Anspruch 2, dadurch gekennzeichnet, daß die zwei Codierstücke zur Festlegung der Taktebene zu einer Codiereinheit (136) zusammengefaßt sind (vgl. Fig. 13).

4. Schloß nach einem der Ansprüche 1 bis 3, dadurch gekennzeichnet, daß der Querschnitt der an den Hallgenerator (H) angrenzenden Flußleitstücke (131a, 131b) in Richtung auf den Hallgenerator (H) abnimmt, und daß an den Stellen der durch die Codierstücke erzeugten Nebenschlüsse dünne, magnetisch leitende Abfragestege (137a, 137b, 137c) angeordnet sind (Fig. 13, 14).

5. Mit einem Schlüssel zu betätigendes Schloß, das einen Lesekopf aus einem Joch mit einem in einem Luftspalt angeordneten Hallgenerator (H) umfaßt, dessen magnetische Induktion sich in Abhängigkeit von der Stellung des längs seiner Achse aufeinanderfolgende, einen mindestens zweiwertigen (dualen) Code bildende magnetisch lesbare Informationsstellen (J1, J2) tragenden Schlüssels ändert und dessen von dem Augenblickswert der Induktion abhängige Signalspannung eine Empfangsschaltung mit gespeichertem Sollinformationen vergleicht und bei Übereinstimmung die mechanische Sperrvorrichtung des Schlosses betätigt, dadurch gekennzeichnet, daß der Hallgenerator (H) sich in einem Luftspalt zwischen zwei symmetrisch zu dem Hallgenerator (H) angeord-

neten Flußleitstücken (151a, 151b) befindet, denen ein annähernd U-förmiges, weiteres Flußleitstück (151c) unter Freilassung eines Luftspaltes zum Hindurchführen des Schlüsselkörpers (12) gegenübersteht, das in der Mitte seiner Innenseite einen Magneten (153) trägt, dessen magnetische Achse senkrecht auf der Längsachse dieses weiteren Flußleitstückes (151c) steht, und daß jede Informationsstelle des Schlüssels zwei magnetisch leitende Codierstücke (155a, 155b) umfaßt, die beim Hindurchführen des Schlüsselkörpers (12) durch den Luftspalt den magnetischen Kreis unsymmetrisch in bezug auf den Hallgenerator (H) schließen, und daß die Lage der Codierstücke in bezug auf den Hallgenerator die Richtung des diesen durchsetzenden Magnetflusses steuert und so die jeweilige Codeziffer der zugehörigen Informationsstelle definiert und daß auf jede Informationsstelle (J) eine magnetisch lesbare Taktebene (T) folgt, die die Verarbeitung der von dem Hallgenerator (H) in dem Lesekopf zuvor ausgelesenen Informationsstelle in der Empfangsschaltung steuert (Fig. 15, 16).

6. Schloß nach Anspruch 5, dadurch gekennzeichnet, daß jede Taktebene durch eine Codiereinheit (155a, 155b) im Schlüsselkörper (12) gebildet ist, die zwei magnetische Kreise symmetrisch zu dem Hallgenerator (H) schließt.

7. Schloß nach einem der Ansprüche 1 bis 6, dadurch gekennzeichnet, daß der Abstand (a) der ersten Taktebene (T1) von der ersten Informationsstelle (J1) größer als die gegenseitigen Abstände (b) der folgenden Informationsstellen und Taktebenen ist (Fig. 15).

8. Mit einem Schlüssel zu betätigendes Schloß, das einen Lesekopf aus einem ringförmig geschlossenen Joch mit einem in einem Luftspalt angeordneten Hallgenerator (H) umfaßt, dessen magnetisch lesbare Induktion sich in Abhängigkeit von der Stellung des längs seiner Achse aufeinanderfolgende, einen mindestens zweiwertigen (dualen) Code bildende magnetische Informationsstellen (J1, J2) tragenden Schlüssels ändert und dessen von dem Augenblickswert der Induktion abhängige Signalspannung eine Empfangsschaltung mit gespeicherten Sollinformationen vergleicht und bei Übereinstimmung die mechanische Sperrvorrichtung des Schlosses betätigt, dadurch gekennzeichnet, daß das Joch eine Ausnehmung zum Hindurchführen des Schlüsselkörpers (12) aufweist und eine Breite etwa gleich dem gegenseitigen Abstand der Informationsstellen hat, und daß in der Mitte der einen Seite der Ausnehmung der Hallgenerator (H) mit seiner magnetempfindlichen Fläche parallel zur Verschiebungsrichtung des Schlüsselkörpers (12) auf einem ihn mit dem benachbarten Jochschenkel verbindenden Abfragesteg (172) sitzt, daß in der Mitte der anderen Seite der Ausnehmung des Joches (171) ein Magnet (183) mit zur Verschiebungsrichtung rechtwinkeliger magnetischer Achse sitzt, daß jede Informationsstelle (J1 bis Jn) ein magnetisch leitendes Codierstück (175a, 175b, 175) umfaßt, das den magnetischen Kreis zwischen dem Magneten (183) und dem Hallgenerator (H) schließt und dessen Stirnflächenquerschnitt die Höhe der Induktion durch den Hallgenerator (H) steuert und so die jeweilige Codeziffer der zugehörigen Informationsstelle definiert und daß auf jede Informationsstelle (J) eine magnetisch lesbare Taktebene (T) folgt, die die Verarbeitung der von dem Hallgenerator (H) in dem Lesekopf zuvor ausgelesenen Informationsstelle in der Empfangsschaltung steuert (Fig. 17 bis 21).

9. Mit einem Schlüssel zu betätigendes Schloß, das einen Lesekopf aus einem Joch mit einem in einem Luftspalt angeordneten Hallgenerator (H) umfaßt, dessen magnetische Induktion sich in Abhängigkeit von der Stellung des längs seiner Achse aufeinanderfolgende, einen mindestens zweiwertigen (dualen) Code bildende magnetisch lesbare Informationsstellen (J1, J2) tragenden Schlüssels ändert und dessen von dem Augenblickswert der Induktion abhängige Signalspannung eine Empfangsschaltung mit gespeicherten Sollinformationen vergleicht und bei Übereinstimmung die mechanische Sperrvorrichtung des Schlosses betätigt, dadurch gekennzeichnet, daß das Joch (351) annähernd U-förmig ausgebildet ist, daß seine Breite (b) etwa gleich dem gegenseitigen Abstand der Informationsstellen (J1 bis J6) auf dem Schlüsselkörper (12) ist, daß ein Schenkel des Joches einen Magneten (353) mit rechtwinkelig zur Ebene des Querschenkels verlaufender, magnetischer Achse enthält, daß der andere Schenkel mittig auf einem Abfragesteg (352) den Hallgenerator (H) mit seiner magnetfeldempfindlichen Fläche parallel zur Verschieberichtung des Schlüsselkörpers (12) trägt, daß jede Informationsstelle (J1 bis J6) ein annähernd U-förmiges, magnetisch leitendes Codierstück (355a, 355b) umfaßt, das den magnetischen Kreis zwischen dem Magneten (353) und dem Hallgenerator (H) schließt und dessen Stirnflächenquerschnitt die Höhe der Induktion durch den Hallgenerator (H) steuert und so die jeweilige Codeziffer der zugehörigen Informationsstelle definiert, und daß auf jede Informationsstelle (J) eine magnetisch lesbare Taktebene (T) folgt, die die Verarbeitung der von dem Hallgenerator (H) in dem Lesekopf zuvor ausgelesenen Informationsstelle in der Empfangsschaltung steuert (Fig. 35, 36).

10. Schloß nach Anspruch 9, dadurch gekennzeichnet, daß die Codierstücke (375a, 375b) streifenförmig ausgebildet sind und daß ihre Länge die Höhe der Induktion durch den Hallgenerator (H) steuert (Fig. 37a, 37b).

11. Mit einem Schlüssel zu betätigendes Schloß, das einen Lesekopf aus einem Joch mit einem in einem Luftspalt angeordneten Hallgenerator (H) umfaßt, dessen magnetische Induktion sich in Abhängigkeit von der Stellung des längs seiner Achse aufeinanderfolgende, einen mindestens zweiwertigen (dualen) Code bildende magnetisch lesbare Informationsstellen (J1, J2) tragenden Schlüssels ändert und dessen von dem Augenblickswert der Induktion abhängige Signalspannung eine Empfangsschaltung mit gespeicherten Sollinformationen vergleicht und bei Übereinstimmung die mechanische Sperrvorrichtung des Schlosses betätigt, dadurch gekennzeichnet, daß das Joch (381) annähernd U-förmig ausgebildet ist, daß seine Breite etwa gleich dem gegenseitigen Abstand der Informationsstellen (J1 bis J8) auf dem Schlüsselkörper (12) ist, daß jeder Schenkel des Joches je einen Magneten (383, 384) trägt, daß die beiden Magnete (383, 384) gegensinnig gepolt sind, daß der Querschenkel des Joches in der Mitte auf einem Abfragesteg (382) den Hallgenerator (H) mit zur Verschieberichtung paralleler, magnetempfindlicher Fläche (HF) trägt, daß jede Informationsstelle zwei Codierstücke (385a, 385b) umfaßt, die die Magnetflüsse beider Magneten über den Abfragesteg (352) unsymmetrisch schließen, daß die Lage der Trennstelle (380) zwischen den zwei Codierstücken (385a, 385b) die Richtung des magnetischen Flusses durch den Hallgenerator (H) steuert und damit die jeweilige Codeziffer der zugehörigen Informationsstelle definiert, und daß auf jede Informationsstelle (J) eine magnetisch lesbare Taktebene (T) folgt, die die Verarbeitung der von dem Hallgenerator (H) in dem Lesekopf zuvor ausgelesenen Informationsstelle in der Empfangsschaltung steuert (Fig. 38 bis 43).

12. Mit einem Schlüssel zu betätigendes Schloß, das einen Lesekopf aus einem ringförmig geschlossenen Joch mit einem in einem Luftspalt angeordneten Hallgenerator (H) umfaßt, dessen magnetische Induktion sich in Abhängigkeit von der Stellung des längs seiner Achse aufeinanderfolgende, einen mindestens zweiwertigen (dualen) Code bildende magnetisch lesbare Informationsstellen (J1, J2) tragenden Schlüssels ändert und dessen von dem Augenblickswert der Induktion abhängige Signalspannung eine Empfangsschaltung mit gespeicherten Sollinformationen vergleicht und bei Übereinstimmung die mechanische Sperrvorrichtung des Schlosses betätigt, dadurch gekennzeichnet, daß das Joch (441) eine Ausnehmung zum Hindurchführen des Schlüsselkörpers (12) aufweist und eine Breite etwa gleich dem gegenseitigen Abstand der Informationsstellen hat, daß in der Mitte der einen Seite der Ausnehmung der Hallgenerator (H) mit seiner magnetfeldempfindlichen Fläche parallel zur Verschiebungsrichtung des Schlüsselkörpers (12) auf einem ihn mit dem benachbarten Jochschenkel verbindenden Abfragesteg (442) sitzt, daß auf der anderen Seite der Ausnehmung ein Flußleitstück (449) sitzt, daß jede Informationsstelle (J1 bis J5) aus einem Magneten (443) mit beidseits aufgesetzten Flußleitstücken (445a, 445b) besteht, die den magnetischen Kreis zwischen diesem Magneten (443) und dem Hallgenerator (H) schließen und deren Stirnflächenquerschnitt die Höhe der Induktion durch den Hallgenerator (H) steuert und so die jeweilige Codeziffer der zugehörigen Informationsstelle (J1 bis Jn) definiert, und daß auf jede Informationsstelle (J) eine magnetisch lesbare Taktebene (T) folgt, die die Verarbeitung der von dem Hallgenerator (H) in dem Lesekopf zuvor ausgelesenen Informationsstelle in der Empfangsschaltung steuert (Fig. 44 bis 47).

13. Mit einem Schlüssel zu betätigendes Schloß, das einen Lesekopf aus einem Joch mit einem in einem Luftspalt angeordneten Hallgenerator (H) umfaßt, dessen magnetische Induktion sich in Abhängigkeit von der Stellung des längs seiner Achse aufeinanderfolgende, einen mindestens zweiwertigen (dualen) Code bildende magnetisch lesbare Informationsstellen (J1, J2) tragenden Schlüssels ändert und dessen von dem Augenblickswert der Induktion abhängige Signalspannung eine Empfangsschaltung mit gespeicherten Sollinformationen vergleicht und bei Übereinstimmung die mechanische Sperrvorrichtung des Schlosses betätigt, dadurch gekennzeichnet, daß das Joch (481) annähernd U-förmig ausgebildet ist, daß seine Breite in Verschieberichtung des Schlüsselkörpers etwa gleich dem gegenseitigen Abstand der Informationsstellen (J1 bis J6) ist, daß der eine Schenkel des Joches den Hallgenerator (H) mittig in einem Abfragesteg (482a, 482b) mit zur Verschieberichtung paralleler magnetempfindlicher Fläche trägt, daß der andere Schenkel des Joches (481) ein Flußleitstück (489) gegenüber dem Hallgenerator (H) trägt, daß der Querschenkel des Joches (481) mit einem parallel zur Verschieberichtung verlaufenden Ableitsteg (488) versehen ist, daß jede Informationsstelle (J1 bis J8) aus einem Magneten (483) mit beidseits aufgesetzten Flußleitstücken (485) besteht, deren eines eine mit dem Hallgenerator (H) zusammenwirkende Stirnfläche (485a) und eine hierzu rechtwinklige, mit dem Ableitsteg (488) zusammenwirkende Stirnfläche (485b) hat und deren anderes mit dem Flußleitstück (489) auf dem anderen Schenkel des Joches (481) zusammenwirkt, daß die Stellung der weiteren Stirnfläche (485b) des ersten Flußleitstückes in bezug auf den Ableitsteg (488) die Höhe der Induktion durch den Hallgenerator (H) steuert und damit die Codeziffer der zugehörigen Informationsstelle definiert, und daß auf jede Informationsstelle (J) eine magnetisch lesbare Taktebene (T) folgt, die die Verarbeitung der von dem Hallgenerator (H) in dem Lesekopf zuvor ausgelesenen Informationsstelle in der Empfangsschaltung steuert (Fig. 48 bis 50).

14. Schloß nach Anspruch 13, dadurch gekennzeichnet, daß die Flußleitstücke (485) auf den Magneten (483) des Schlüsselkörpers zueinander punktsymmetrisch sind.

15. Schloß nach einem der Ansprüche 12 bis 14, dadurch gekennzeichnet, daß jede Informationsstelle (J1 bis J6) aus einem teilweise magnetisierten Magnetmaterial (465a, 465b) besteht (Fig. 46).

16. Schloß nach einem der Ansprüche 8 bis 15, dadurch gekennzeichnet, daß die Taktebenen durch die dem zwischen den einzelnen Informationsstellen den Hallgenerator (H) durchsetzenden Streufluß entsprechende Induktion festgelegt sind.

17. Schloß nach einem der Ansprüche 8 bis 16, dadurch gekennzeichnet, daß die Informationsstellen (J1 bis Jn) auf dem Schlüsselkörper (12) in einem festen Abstand (b) aufeinanderfolgen und daß in Verschieberichtung beidseits der magnetempfindlichen Fläche (HF) des Hallgenerators (H) in einem die Hälfte dieses Abstandes (b) betragenden Abstand (b/2) mit dem Joch (z. B. 171 oder 481) verbundene Ableitstege (z. B. 177a, 177b oder 487a, 487b) vorgesehen sind und den Streufluß des Magneten (z. B. 183) über die Codierstücke (z. B. 175a, 175b oder 485) aufeinanderfolgender Informationsstellen (z. B. J2, J3) ableiten.

18. Schloß nach einem der Ansprüche 8 bis 17, dadurch gekennzeichnet, daß symmetrisch zu dem Hallgenerator (H) im Bereich der Ableitstege (z. B. 177a, 177b oder 487a, 487b) je ein Kompensationsmagnet (z. B. 201a, 201b oder 486a, 486b) für den Streufluß des Magneten (z. B. 183 oder 483) angeordnet ist.

19. Schloß nach einem der Ansprüche 8 bis 18, dadurch gekennzeichnet, daß die Codierstücke (365b in Fig. 36c; 375b in Fig. 37c) umschlagsymmetrisch auf zwei sich gegenüberliegende Fläche des Schlüsselkörpers (12) angeordnet sind.

20. Schloß nach einem der Ansprüche 1 bis 19, dadurch gekennzeichnet, daß der Hallgenerator (H) ohne Luftspalt zwischen zwei etwa querschnittsgleichen Flußleitplättchen (482a, 482b) eingebettet ist (Fig. 50).

21. Schloß nach einem der Ansprüche 1 bis 21, dadurch gekennzeichnet, daß die von dem Hallgenerator (H) abgegebene Signalspannung in Schaltverstärkern mit Hystereseverhalten (OP2, OP3) in digital verarbeitbare Spannungspegel umgesetzt wird.

## Claims

1. A lock to be actuated by a key, which includes a reading head comprising a yoke of annularly closed configuration with a Hall generator (H) which is arranged in an air gap and the magnetically readable induction of which changes in dependence on the position of the key which carries disposed in succession along its axis magnetic information locations (J1, J2) forming an at least two-valued (dual) code, the signal voltage of the Hall generator, which depends on the instantaneous value of the induction, being compared by a receiving circuit to stored reference information and, upon coincidence thereof, actuating the mechanical locking means of the lock, characterised in that the yoke defines a central opening for passing the body portion (12) of the key therethrough and comprises flux guide portions (11a, 11b, 11c) and two magnets (13, 14) which are arranged symmetrically with respect to the Hall generator (H) and whose magnetic fluxes cancel each other before insertion of the key body portion (12), that each information location (J1, J2) comprises a magnetically conducting coding portion (15a, 15b) which, when the key body portion (12) is passed through the central opening, forms a magnetic shunt which is asymmetrical with respect to the Hall generator (H), that the position of the respective shunt with respect to the Hall generator (H) controls the direction of the magnetic flux through the Hall generator and defines the respective code number of the associated information location, and that each information location (J) is followed by a magnetically readable timing plane (T) which controls processing of the information location which is previously read out by the Hall generator (H) in the reading head, in the receiving circuit (Figures 1 to 5).

2. A lock according to claim 1 characterised in that each timing plane (T1, T2) is formed by two coding portions (15a, 15b) in the key body portion (12), which produce, in the yoke, two shunts which are symmetrical with respect to the Hall generator (H) (Figures 3, 5).

3. A lock according to claim 2 characterised in that the two coding portions, for determining the timing plane, are combined together to form a coding unit (136) (see Figure 13).

4. A lock according to one of claims 1 to 3 characterised in that the cross-section of the flux guide portions (131a, 131b) which adjoin the Hall generator (H) decreases towards the Hall generator (H) and that thin, magnetically conducting interrogation bar portions (137a, 137b, 137c) are disposed at the locations of the shunts produced by the coding portions (Figures 13, 14).

5. A lock to be actuated by a key, which includes a reading head comprising a yoke with a Hall generator (H) which is arranged in an air gap and the magnetic induction of which changes in dependence on the position of the key which carries disposed in succession along its axis magnetically readable information locations (J1, J2) forming an at least two-valued (dual) code, the signal voltage of the Hall generator, which depends on the instantaneous value of the induction, being compared by a receiving circuit to stored reference information and, upon coincidence thereof, actuating the mechanical locking means of the lock, characterised in that the Hall generator (H) is disposed in an air gap between two flux guide portions (151a, 151b) which are disposed symmetrically with respect to the Hall generator (H) and opposite which is disposed a substantially U-shaped, further flux guide portion (151c), leaving a free air gap for passing the key body portion (12) therethrough, the key body portion (12), in the centre of its inner side, carrying a magnet (153), the magnetic axis of which is disposed normal to the longitudinal axis of said further flux guide portion (151c), and that each information location of the key includes two magnetically conducting coding portions (155a, 155b) which, when the key body portion (12) is passed through the air gap, close the magnetic circuit asymmetrically with respect to the Hall generator (H), and that the position of the coding portions relative to the Hall generator controls the direction of the magnetic flux passing therethrough and thus defines the respective code number of the associated information location, and that each information location (J) is followed by a magnetically readable timing plane (T) which controls the processing of the information location which is previously read out by the Hall generator (H) in the reading head, in the receiving circuit (Figures 15, 15).

6. A lock according to claim 5 characterised in that each timing plane is formed by a coding unit (155a, 155b) in the key body portion (12), which closes two magnetic circuits symmetrically with respect to the Hall generator (H).

7. A lock according to one of claims 1 to 6 characterised in that the spacing (a) of the first timing plane (T1) from the first information location (J1) is greater than the mutual spacings (b) of the following information locations and timing planes (Figure 15).

8. A lock to be actuated by a key, which includes a reading head comprising a yoke of annularly closed configuration with a Hall generator (H) which is arranged in an air gap and the magnetically readable induction of which changes in dependence on the postion of the key which carries disposed in succession along its axis magnetic information locations (J1, J2) forming an at least two-valued (dual) code, the signal voltage of the Hall generator, which depends on the instantaneous value of the induction, being compared by a receiving circuit to stored reference information and, upon coincidence thereof, actuating the mechanical locking means of the lock, characterised in that the yoke has an aperture for passing the body portion (12) of the key therethrough, and is approximately equal in with to the mutual spacing of the information locations, and that the Hall generator (H) is disposed, in the centre of one side of the aperture, on an interrogation bar portion (172) which connects it to the adjacent limb portion of the yoke, with its magnet-sensitive surface parallel to the direction of movement of the key body portion (12), that a magnet (183) is disposed in the centre of the other side of the aperture in the yoke (171), with its magnetic axis perpendicular to the direction of movement, that each information location (J1 to Jn) includes a magnetically conducting coding portion (175a, 175b, 175) which closes the magnetic circuit between the magnet (183) and the Hall generator (H) and the end face cross-section of which controls the magnitude of induction through the Hall generator (H) and thus defines the respective code number of the associated information location, and that each information location (J) is followed by a magnetically readable timing plane (T) which controls the processing of the information location which is previously read out by the Hall generator (H) in the reading head, in the receiving circuit (Figures 17 to 21).

9. A lock to be actuated by a key, which includes a reading head comprising a yoke with a Hall generator (H) which is arranged in an air gap and the magnetic induction of which changes in dependence on the position of the key which carries disposed in succession along its axis magnetically readable information locations (J1, J2) forming an at least two-valued (dual) code, the signal voltage of the Hall generator, which depends on the instantaneous value of the induction, being compared by a receiving circuit to stored reference information and, upon coincidence thereof, actuating the mechanical locking means of the lock, characterised in that the yoke (351) is of approximately U-shaped configuration, that its width (b) is approximately equal to the mutual spacing of the information locations (J1 to J6) on the key body portion (12), that a limb portion of the yoke carries a magnet (353) with its magnetic axis extending perpendicularly to the plane of the transverse limb portion, that the other limb portion carries the Hall generator (H), at a central location, on an interrogation bar portion (352), with its magnet-sensitive surface parallel to the direction of movement of the key body portion (12), that each information location (J1 to J6) includes an approximately U-shaped, magnetically conducting coding portion (355a, 355b) which closes the magnetic circuit between the magnet (353) and the Hall generator (H) and the end face cross-section of which controls the magnitude of induction through the Hall generator (H) and thus defines the respective code number of the associated information location, and that each information location (J) is followed by a magnetically readable timing plane (T) which controls the processing of the information location which is previously read out by the Hall generator (H) in the reading head, in the receiving circuit (Figures 35, 36).

10. A lock according to claim 9 characterised in that the coding portions (375a, 375b) are of a strip-like configuration and that their length controls the magnitude of induction through the Hall generator (H) (Figures 37a, 37b).

11. A lock to be actuated by a key, which includes a reading head comprising a yoke with a Hall generator (H) which is arranged in an air gap and the magnetic induction of which changes in dependence on the position of the key which carries disposed in succession along its axis magnetically readable information locations (J1, J2) forming an at least two-valued (dual) code, the signal voltage of the Hall generator, which depends on the instantaneous value of the induction, being compared by a receiving circuit to stored reference information and, upon coincidence thereof, actuating the mechanical locking means of the lock, characterised in that the yoke (381) is of approximately U-shaped configuration, that its width is approximately equal to the mutual spacing of the information locations (J1 to J8) on the key body portion (12), that each limb portion of the yoke carries a respective magnet (383, 384), that the two magnets (383, 384) are of opposite polarities, that the transverse limb portion of the yoke carries the Hall generator (H), in the centre, on an interrogation bar portion (382), with its magnet-sensitive surface (HF) parallel to the direction of movement, that each information location includes two coding portions (385a, 385b) which asymmetrically close the magnetic fluxes of the two magnets by way of the interrogation bar portion (352), that the position of the division (380) between the two coding portions (385a, 385b) controls the direction of the magnetic flux through the Hall generator (H) and thereby defines the respective code number of the associated information location, and that each information location (J) is followed by a magnetically readable timing plane (T) which controls the processing of the information location which is previously read out by the Hall generator (H) in the reading head, in the receiving circuit (Figures 38 to 43).

12. A lock to be actuated by a key, which includes a reading head comprising a yoke which is of an annular closed configuration with a Hall generator (H) which is arranged in an air gap and the magnetic induction of which changes in dependence on the position of the key which carries disposed in seccession along its axis magnetically readable information locations (J1, J2) forming an at least two-valued (dual) code, the signal voltage of the Hall generator, which depends on the instantaneous value of the induction, being compared by a receiving circuit to stored refence information and, upon coincidence thereof, actuating the mechanical locking means of the lock, characterised in that the yoke (441) has an aperture for passing the body portion (12) of the key therethrough, and is approximately equal in width to the mutual spacing of the information locations, that the Hall generator (H) is carried, in the centre of one side of the aperture, on an interrogation bar portion (442) which connects it to the adjacent limb portion of the yoke, with its magnet-sensitive surface parallel to the direction of movement of the key body portion (12), that a flux guide portion (449) is carried on the other side of the aperture, that each information location (J1 to J5) comprises a magnet (443) with flux guide portions (445a, 445b) disposed on both sides, which close the magnetic circuit between said magnet (443) and the Hall generator (H) and the end face cross-section of which controls the magnitude of induction through the Hall generator (H) and thus defines the respective code number of the associated information location (J1 to Jn), and that each information location (J) is followed by a magnetically readable timing plane (T) which controls the processing of the information location which is previously read out by the Hall generator (H) in the reading head, in the receiving circuit (Figures 44 to 47).

13. A lock to be actuated by a key, which includes a reading head comprising a yoke with a Hall generator (H) which is arranged in an air gap and the magnetic induction of which changes in dependence on the position of the key which carries disposed in succession along its axis magnetically readable information locations (J1, J2) forming an at least two-valued (dual) code, the signal voltage of the Hall generator, which depends on the instantaneous value of the induction, being compared by a receiving circuit to stored reference information and, upon coincidence thereof, actuating the mechanical locking means of the lock, characterised in that the yoke (481) is of approximately U-shaped configuration, that its width in the direction of movement of the key body portion is approximately equal to the mutual spacing of the information locations (J1 to J6), that one limb portion of the yoke carries the Hall generator (H) in a central position in an interrogation bar portion (482a, 482b), with its magnet-sensitive surface parallel to the direction of movement, that the other limb portion of the yoke (481) carries a flux guide portion (489) opposite the Hall generator (H), that the transverse limb portion of the yoke (481) is provided with a leakage bar portion (488) which extends parallel to the direction of movement, that each information location (J1 to J8) comprises a magnet (483) with flux guide portions (485) disposed on both sides, one of the flux guide portions having a front face (485a) co-operating with the Hall generator (H), and a front face (485b) which is normal to the front face (485a) and which co-operates with the leakage bar portion (488), and the other flux guide portion co-operating with the flux guide portion (489) on the other limb portion of the yoke (481), that the position of the further face (485b) of the first flux guide portion, relative to the leakage bar portion (488), controls the magnitude of induction through the Hall generator (H) and thus defines the code number of the associated information location, and that each information location (J) is followed by a magnetically readable timing plane (T) which controls the processing of the information location which is previously read out by the Hall generator (H) in the reading head, in the receiving circuit (Figures 48 to 50).

14. A lock according to claim 13 characterised in that the flux guide portions (485) on the magnets (483) of the key body portion are point-symmetrical relative to each other.

15. A lock according to one of claims 12 to 14 characterised in that each information location (J1 to J6) comprises a partially magnetised magnetic material (465a, 465) (Figure 46).

16. A lock according to one of claims 8 to 15 characterised in that the timing planes are defined by the induction corresponding to the leakage flux passing through the Hall generator (H) between the individual information locations.

17. A lock according to one of claims 8 to 16 characterised in that the information locations (J1 to Jn) are disposed in succession on the key body portion (12) at a fixed spacing (B) and that leakage bar portions (for example 177a, 177b or 487a, 487b) which are connected to the yoke (for example 171 or 481) are provided in the direction of movement on both sides of the magnet-sensitive face (HF) of the Hall generator (H), at a spacing (b/2) corresponding to half said spacing (b), and leak off the leakage flux of the magnet (for example 183) by way of the coding portions (for example 175a, 175b or 485) of successive information locations (for example J2, J3).

18. A lock according to one of claims 8 to 17 characterised in that a respective compensation magnet (for example 201a, 201b or 486a, 486b) for the leakage flux of the magnet (for example 183 or 483) is disposed symmetrically with respect to the Hall generator (H) in the region of the leakage bar portions (for example 177a, 177b or 487a, 487b).

19. A lock according to one of claims 8 to 18 characterised in that the coding portions (365b in Figure 36c; 375b in Figure 37c) are arranged on two mutually opposite surfaces of the key body portion (12) symmetrically in such a way as to be in the same positions when the key is turned over.

20. A lock according to one of claims 1 to 19 characterised in that the Hall generator (H) is embedded without an air gap between two flux guide plates (482a, 482b) which are of substantially the same cross-section (Figure 50).

21. A lock according to one of claims 1 to 20 characterised in that the signal voltage produced by the Hall generator (H) is converted in switching amplifiers with hysteresis characteristics (OP2, OP3) into voltage levels which can be digitally processed.

**Revendications**

1. Serrure destinée à être actionnée avec une clef et comprenant une tête de lecture formée d'une culasse annulaire fermée avec un générateur de Hall (H) disposé dans un entrefer, générateur dont l'induction lisible magnétiquement varie en fonction de la position de la clef portant des points d'information magnétiques (J1, J2) se succédant le long de son axe et formant un code à deux valeurs au moins (binaire), et dont la tension-signal, dépendant de la valeur instantanée de l'induction, est comparée avec des informations de consigne mémorisées par un circuit de réception qui, en cas de coïncidence, actionne le dispositif de verrouillage mécanique de la serrure, caractérisée en ce que la culasse limite une ouverture centrale pour le passage du corps du corps de clef (12) et se compose d'éléments conducteurs de flux (11a, 11b, 11c), ainsi que de deux aimants (13, 14) disposés symétriquement par rapport au générateur de Hall (H), aimants dont les flux magnétiques se neutralisent avant l'insertion du corps de clef (12), en ce que chaque point d'information (J1, J2) est constitué par une pièce de codage magnétiquement conductrice (15a, 15b) qui établit, lors du passage du corps de clef (12) à travers l'ouverture centrale, une dérivation magnétique asymétrique par rapport au générateur de Hall (H), en ce que la position de cette dérivation par rapport au générateur de Hall (H) commande le sens du flux magnétique à travers le générateur de Hall et définit le chiffre de code du point d'information associé, et en ce que chaque point d'information (J) est suivi d'un plan de synchronisation (T) lisible magnétiquement qui commande le traitement, dans le circuit de réception, du point d'information lu précédemment par le générateur de Hall (H) dans la tête de lecture (fig. 1 à 5).

2. Serrure selon la revendication 1, caractérisée en ce que chaque plan de synchronisation (T1, T2) est constitué par deux pièces de codage (15a, 15b) dans le corps de clef (12), créant dans la culasse deux dérivations symétriques par rapport au générateur de Hall (H) (fig. 3, 5).

3. Serrure selon la revendication 2, caractérisée en ce que les deux pièces de codage servant à la localisation du plan de synchronisation sont réunies en une unité de codage (136) (voir fig. 13).

4. Serrure selon l'une quelconque des revendications 1 à 3, caractérisée en ce que la section transversale des éléments conducteurs de flux (131a, 131b) contigus au générateur de Hall (H) décroit en direction du générateur de Hall (H), et en ce qu'il est disposé, aux endroits des dérivations produites par les pièces de codage, des nervures minces d'exploration magnétiquement conductrices (137a, 137b, 137c) (fig. 13, 14).

5. Serrure destinée à être actionnée avec une clef et comprenant une tête de lecture formée d'une culasse avec un générateur de Hall (H) disposé dans un entrefer, générateur dont l'induction magnétique varie en fonction de la position de la clef portant des points d'information lisibles magnétiquement (J1, J2) se succédant le long de son axe et formant un code à deux valeurs au moins (binaire), et dont la tension-signal, dépendant de la valeur instantanée de l'induction, est comparée avec des informations de consigne mémorisées par un circuit de réception qui, en cas de coïncidence, actionne le dispositif de verrouillage mécanique de la serrure, caractérisée en ce que le générateur de Hall (H) se trouve dans un entrefer entre deux éléments conducteurs de flux (151a, 151b) qui sont disposés symétriquement par rapport au générateur de Hall (H) et en face desquels est placé, de manière à ménager un entrefer pour le passage du corps de clef (12), un autre élément conducteur de flux (151c) qui a approximativement la forme d'un U et qui porte, au milieu de sa face interne, un aimant (153) dont l'axe magnétique est perpendiculaire à l'axe longitudinal de cet autre élément conducteur de flux (151c), en ce que chaque point d'information de la clef comprend deux pièces de codage magnétiquement conductrices (155a, 155b) qui, lors du passage du corps de clef (12) à travers l'entrefer, ferment le circuit magnétique asymétriquement par rapport au générateur de Hall (H), en ce que la position des pièces de codage par rapport au générateur de Hall commande le sens du flux magnétique qui traverse celui-ci et définit ainsi le chiffre de code du point d'information associé, et en ce que chaque point d'information (J) est suivi d'un plan de synchronisation lisible magnétiquement (T) qui commande le traitement, dans le circuit de réception, du point d'information lu précédemment par le générateur de Hall (H) dans la tête de lecture (fig. 15, 16).

6. Serrure selon la revendication 5, caractérisée en ce que chaque plan de synchronisation est constitué, dans le corps de clef (12), par une unité de codage (155a, 155b) qui ferme deux circuits magnétiques symétriquement par rapport au générateur de Hall (H).

7. Serrure selon l'une quelconque des revendications 1 à 6, caractérisée en ce que la distance (a) du premier plan de synchronisation (T1) au premier point d'information (J1) est plus grande que les distances mutuelles (b) entre les points d'information et plans de synchronisation suivants (fig. 15).

8. Serrure destinée à être actionnée avec une clef et comprenant une tête de lecture formée d'une culasse annulaire fermée avec un générateur de Hall (H) disposé dans un entrefer, générateur dont l'induction lisible magnétiquement varie en fonction de la position de la clef portant des points d'information magnétiques (J1, J2) se succédant le long de son axe et formant un code à deux valeurs au moins (binaire), et dont la tension-signal, dépendant de la valeur instantanée de l'induction, est comparée avec des informations de consigne mémorisées par un circuit de réception qui, en cas de coincidence, actionne le dispositif de verrouillage mécanique de la serrure, caractérisée en ce que la culasse comporte un évidement pour le passage du corps de clef (12) et a une largeur qui est à peu près égale à la distance mutuelle des points d'information, en ce qu'au milieu de l'un des côtes de l'évidement, le générateur de Hall (H) est fixé, avec sa surface magnétiquement sensible parallèle à la direction de déplacement du corps de clef (12), sur une nervure d'exploration (172) qui le relie à la branche voisine de la culasse, en ce qu'il est fixé, au milieu de l'autre côté de l'évidement de la culasse (171), un aimant (183) dont l'axe magnétique est perpendiculaire à la direction de déplacement, en ce que chaque point d'information (J1 à Jn) comprend une pièce de codage magnétiquement conductrice (175a, 175b, 175) qui ferme le circuit magnétique entre l'aimant (183) et le générateur de Hall (H) et dont la section de surface frontale commande le niveau de l'induction à travers le générateur de Hall (H) et définit ainsi le chiffre de code du point d'information associé, et en ce que point d'information (J) est suivi d'un plan de synchronisation lisible magnétiquement (T) qui commande le traitement, dans le circuit de réception, du point d'information lu précédemment par le générateur de Hall (H) dans la tête de lecture (fig. 17 à 21).

9. Serrure destinée à être actionnée avec une clef et comprenant une tête de lecture formée d'une culasse avec un générateur de Hall (H) disposé dans un entrefer, générateur dont l'induction magnétique varie en fonction de la position de la clef portant des points d'information lisibles magnétiquement (J1, J2) se succédant le long de son axe et formant un code à deux valeurs au moins (binaire), et dont la tension-signal, dépendant de la valeur instantanée de l'induction, est comparée avec des informations de consigne mémorisées par un circuit de réception qui, en cas de coincidence, actionne le dispositif de verrouillage mécanique de la serrure, caractérisée en ce que la culasse (351) est réalisée avec la forme approximative d'un U, en ce que sa largeur (b) est à peu près égale à la distance mutuelle des points d'information (J1 à J6) sur le corps de clef (12), en ce qu'une branche de la culasse contient un aimant (353) dont l'axe magnétique s'étend perpendiculairement au plan de la branche transversale, en ce que l'autre branche porte au milieu, sur une nervure d'exploration (352), le générateur de Hall (H) de telle manière que sa surface sensible au champ magnétique soit parallèle à la direction de déplacement du corps de clef (12), en ce que chaque point d'information (J1 à J6) comprend une pièce de codage (355a, 355b) magnétiquement conductrice, ayant approximativement la forme d'un U, qui ferme le circuit magnétique entre l'aimant (353) et le générateur de Hall (H) et dont la section de surface frontale commande le niveau de l'induction à travers le générateur de Hall (H) et définit ainsi le chiffre de code du point d'information associé, et en ce que chaque point d'information (J) est suivi d'un plan de synchronisation (T), lisible magnétiquement, qui commande le traitement, dans le circuit de réception, du point d'information lu précédemment par le générateur de Hall dans la tête de lecture (fig. 35, 36).

10. Serrure selon la revendication 9, caractérisée en ce que les pièces de codage (375a, 375b) sont réalisées en forme de bande et en ce que leur longueur commande le niveau de l'induction à travers le générateur de Hall (H) (fig. 37a, 37b).

11. Serrure destinée à être actionnée avec une clef et comprenant une tête le lecture formée d'une culasse avec un générateur de Hall (H) disposé dans un entrefer, générateur dont l'induction magnétique varie en fonction de la position de la clef portant des points d'information lisibles magnétiquement (J1, J2) se succédant le long de son axe et formant un code à deux valeurs au moins (binaire), et dont la tension-signal, dépendant de la valeur instantanée de l'induction, est comparée avec des informations de consigne mémorisées dans un circuit de réception qui, en cas de coïncidence, actionne le dispositif de verrouillage mécanique de la serrure, caractérisée en ce que la culasse (381) est réalisée avec la forme approximative d'un U, en ce que sa largeur est à peu près égale à la distance mutuelle des points d'information (J1 à J8) sur le corps de clef (12), en ce que chaque branche de la culasse porte un aimant (383, 384), en ce que les deux aimants (383, 384) sont polarisés en sens inverses, en ce que la branche transversale de la culasse porte au milieu, sur une nervure d'exploration (382), le générateur de Hall (H) disposé de telle manière que sa surface sensible magnétiquement (HF) soit parallèle à la direction de déplacement, en ce que chaque point d'information comprend deux pièces de codage (385a, 385b) qui ferment asymétriquement les flux magnétiques des deux aimants à travers la nervure d'exploration (352), en ce que la position du point de séparation (380) entre les deux pièces de codage (385a, 385b) commande le sens du flux magnétique à travers le générateur de Hall (H) et définit ainsi le chiffre de code du point d'information associé, et en ce que chaque point d'information (J) est suivi d'un plan de synchronisation (T), lisible magnétiquement, qui commande le traitement, dans le circuit de réception, du point d'information lu précédemment par le générateur de Hall (H) dans la tête de lecture (fig. 38 à 43).

12. Serrure destinée à être actionnée avec une clef et comprenant une tête de lecture formée d'une culasse annulaire fermée avec un générateur de Hall (H) disposé dans un entrefer, générateur dont l'induction magnétique varie en fonction de la position de la clef portant des points d'information lisibles magnétiquement (J1, J2) se succédant le long de son axe et formant un code à deux valeurs au moins (binaire), et dont la tension-signal, dépendant de la valeur instantanée de l'induction, est comparée avec des informations de consigne mémorisées par un circuit de réception qui, en cas de coïncidence, actionne le dispositif de verrouillage mécanique de la serrure, caractérisée en ce que la culasse (441) présente un évidement pour le passage du corps de clef (12) et a une largeur qui est à peu près égale à la distance mutuelle des points d'information, en ce qu'au milieu de l'un des côtés de l'évidement, le générateur de Hall (H) est monté, de telle manière que sa surface sensible au champ magnétique soit parallèle à la direction de déplacement du corps de clef (12), sur une nervure d'exploration (442) qui le relie à la branche voisine de la culasse, en ce qu'il est fixé une pièce conductrice de flux (449) sur l'autre côté de l'évidement, en ce que chaque point d'information (J1 à J5) est constitué par un aimant (443) avec des pièces conductrices de flux (445a, 445b) placées de part et d'autre, qui ferment le circuit magnétique entre cet aimant (443) et le générateur de Hall (H) et dont la section de surface frontale commande le niveau de l'induction à travers le générateur de Hall (H) et définit ainsi le chiffre de code du point d'information associé (J1 à Jn), et en ce que chaque point d'information (J) est suivi d'un plan de synchronisation (T), lisible magnétiquement, qui commande le traitement, dans le circuit de réception, du point d'information lu précédemment par le générateur de Hall (H) dans la tête de lecture.

13. Serrure destinée à être actionnée avec une clef et comprenant une tête de lecture formée d'une culasse avec un générateur de Hall (H) disposé dans un entrefer, générateur dont l'induction magnétique varie en fonction de la position de la clef portant des points d'information lisibles magnétiquement (J1, J2), formant un code à deux valeurs au moins (binaire) et se succédant le long de son axe, et dont la tension-signal, dépendant de la valeur instantanée de l'induction, est comparée avec des informations de consigne mémorisées dans un circuit de réception qui, en cas de coincidence, actionne le dispositif de verrouillage mécanique de la serrure, caractérisée en ce que la culasse (481) est réalisée avec la forme approximative d'un U, en ce que sa largeur dans la direction de déplacement du corps de clef est approximativement égale à la distance mutuelle des points d'information (J1 à J6), en ce que l'une des branches de la culasse porte au milieu, sur une nervure d'exploration (482a, 482b), le générateur de Hall (H) de telle manière que la surface sensible magnétiquement de celui-ci soit parallèle à la direction de déplacement, en ce que l'autre branche de la culasse (481) porte une pièce conductrice de flux (489) en face du générateur de Hall (H), en ce que la branche transversale de la culasse (481) est munie d'une arête de dérivation (488) qui s'étend parallèlement à la direction de déplacement, en ce que chaque point d'information (J1 à J8) se compose d'un aimant (483) avec des pièces conductrices de flux (485) placées de part et d'autre, dont l'une présente une surface frontale (485a) qui coopère avec le générateur de Hall (H) et une surface frontale (485b), perpendiculaire à celle-ci, qui coopère avec la nervure de dérivation (488), tandis que l'autre pièce conductrice de flux coopère avec la pièce conductrice de flux (489) sur l'autre branche de la culasse (481), en ce que la position de la seconde surface frontale (485b) de la première pièce conductrice de flux, par rapport à la nervure de dérivation (488), commande le niveau de l'induction à travers le générateur de Hall (H) et définit ainsi le chiffre de code du point d'information associé, et en ce que chaque point d'information (J) est suivi d'un plan de synchronisation (T), lisible magnétiquement, qui commande le traitement, dans le circuit de réception, du point d'information lu précédemment par le générateur de Hall (H) dans la tête de lecture (fig. 48 à 50).

14. Serrure selon la revendication 13, caractérisée en ce que les pièces conductrices de flux (485) présentent entre elles une symétrie ponctuelle sur l'aimant (483) du corps de clef.

15. Serrure selon l'une quelconque des revendications 12 à 14, caractérisée en ce que chaque point d'information (J1 à J6) est fait d'une matière magnétique partiellement aimantée (465a, 465b).

16. Serrure selon l'une quelconque des revendications 8 à 15, caractérisée en ce que les plans de synchronisation sont localisés par l'induction correspondant au flux de dispersion qui passe à travers le générateur de Hall (H) entre les différents points d'information.

17. Serrure selon l'une quelconque des revendications 8 à 16, caractérisée en ce que les points d'information (J1 à Jn) se succèdent à une distance fixe (b) sur le corps de clef (12), et en ce que des nervures de dérivation (par exemple 177a, 177b ou 487a, 487b), fixées à la culasse (par exemple 171 ou 481), sont prévues des deux côtés, dans la direction de déplacement, de la surface magnétiquement sensible (HF) du générateur de Hall (H), à une distance (b/2) qui s'élève à la moitié de cette distance (b), et dérivent le flux de dispersion de l'aimant (par exemple 183) à travers les pièces de codage (par exemple 175a, 175b ou 485) de points d'information successifs (par exemple J2, J3).

18. Serrure selon l'une quelconque des revendications 8 à 17, caractérisé en ce qu'il est disposé, symétriquement par rapport au générateur de Hall (H), au niveau de chacune des nervures de dérivation (par exemple 177a, 177b ou 487a, 487b), un aimant de compensation (par exemple 201a, 201b ou 486a, 486b) pour le flux de dispersion de l'aimant (par exemple 183 ou 483).

19. Serrure selon l'une quelconque des revendications 8 à 18, caractérisée en ce que les pièces de codage (365b sur la fig. 36c; 375b sur la fig. 37c) sont disposées en position symétrique par retournement sur deux surfaces opposées du corps de clef (12).

20. Serrure selon l'une quelconque des revendications 1 à 19, caractérisée en ce que le générateur de Hall (H) est encastré sans entrefer entre deux plaquettes conductrices de flux (482a, 482b) ayant à peu près la même section transversale (fig. 50).

21. Serrure selon l'une quelconque des revendications 1 à 21, caractérisée en ce que la tension-signal délivrée par le générateur de Hall (H) est convertie en niveau de tension susceptible de traitement numérique, dans des amplificateurs de commutation à caractéristique d'hystérèse (OP2, OP3).

Fig. 1

Fig. 6

Fig. 2

Fig. 3

Fig. 4

Fig. 5

# FIG. 7

Hallspannungs-Verstärkung

Strom Subtraktion / Addition zur Nullpunkt - Einstellung

U = konstant

J = konst.

+U

Ausgangs-Verstärker

$U_S$

0V

konst.-Spg.-Erzeugung

Hall-Generator

Abgleich Nullpunkt ($B_0 / U_{S3}$)

P1

P2

Abgleich Steilheit (Winkel $\alpha$)

# FIG. 8

$U_S = f(B)$

Signalspannung $U_S$

$U_S$ max

$U_{S6}$

$U_{S5}$

$U_{S4}$

$U_{S3}$

$U_{S2}$

$U_{S1}$

Schwellwert für Signal Rücksetzen

Hysterese-Bereich für Signal log. 1

Schwellwert für Signal log. 1

Signal-Spannung für magn. Durchflutung = 0

Hysterese-Bereich für Signal log. 0

Bereich für Jst-Jnformat.-Übernahme

Schwellwert für Signal log. 0

$\alpha$

- B max    - B2    - B1    ± B0    + B1    + B2    + B3    + Bmax

magnetische Jnduktion B

23

FIG. 9

+U ref 3
(U_S6)

+U

OP 1

U3-N

U_S

C1   R 10

R13

R11

+U

G 19

R12

U2-P

OP 2

R 16

R14

+U

R15

U1-P

OP 3

FIG. 10a

U_3

Signal Rücksetzen

0   U_S1   U_S2   U_S3   U_S4   U_S5   U_S6   U_S

U_2

Signal log. 1

Hysterese

FIG. 10b

0   U_S1   U_S2   U_S3   U_S4   U_S5   U_S6   U_S

U_1

Signal log. 0

Hysterese

FIG. 10c

0   U_S1   U_S2   U_S3   U_S4   U_S5   U_S6   U_S

0 034 597

FIG. 11

FIG. 12

magnetische Jnduktion B

(Signal-Spg. $U_S$)

$\{$ + B3 ($U_{S6}$)
+ B2 ($U_{S5}$)
+ B1 ($U_{S4}$)
± B0 ($U_{S3}$)
− B1 ($U_{S2}$)
− B2 ($U_{S1}$) $\}$

Schlüssel einschieben — Schlüssel zurückziehen

Signal Rücksetzen — U3-N

Signal log. 1 — U2-P

Signal log. 0 — U1-P

Jst-Information (gespeichert) $\{$ log. 1 / log. 0 $\}$

Schieberegister - Takt

Ausgänge Schieberegister 2 $\{$ A8 — log.1 / A7 — log.1 / A6 — log.1 / A5 — log.1 $\}$

Ausgänge Schieberegister 1 $\{$ A4 — log.0 / A3 — log.0 / A2 — log.1 / A1 — log.0 $\}$

Soll / Jst − Vergleich $\{$ richtig / falsch $\}$

0 034 597

## Fig. 13

Fig.14a

Fig.14b

Fig.14c

Fig.16a

Fig.16b

Fig.16c

# Fig. 15

**Fig.17**

*171* — *177b*

*172*

H

HF

*177a*

$\frac{b}{2}$

*179*

J1

J2  b

J3  b

b

Jn-1  b

Jn  b

*12*

*178*

*175a*

*175b*

*175a*

*175a*

**Fig.17a**

*178*

*175*

*175b*

# Fig.18

# Fig. 19

# Fig. 20

# Fig. 21a

# Fig. 21b

FIG. 23

+U ref 3
=U$_S$4

U$_S$

C1   R10

+U ref 2
=U$_S$3

+U ref 1

R 231

OP 1    U3-N

OP 2    U2-N

OP 3    UT

FIG. 24 a

Signal
Rücksetzen

FIG. 24 b

Jst-Jnformation
log. 1

FIG. 24 c

Hysterese

Rücksetzen
Jnform.-Flip-Flop

Jst-Jnformat.-
Übernahme

FIG. 11

Takt-Sperre

G 13

Schieberegister-Takt
(für Schiebereg. 1 u. 2 FIG.11)

VZ2

UT

U2-N

Jst-Jnf.-Eingabe
(zum Schiebereg. 1 in FIG.11)

FIG. 25

Bereich für Signal Rücksetzen

U$_S$4

Bereich für Jst-Jnformat.
log. 1

U$_S$3

Bereich für Jst-Jnf.
log. 0

U$_S$2

U$_S$1

U$_S$ = f (B)

FIG. 22

Hysterese-Bereich
zur Übernahme der
Jst-Jnformation

Signalspannung U$_S$

0   B1   B2   B3   B4

magnetische Jnduktion  B

0 034 597

# FIG. 26

magnetische
Jnduktion B

B4 (U_S4)
B3 (U_S3)
B2 (U_S2)
B1 (U_S1)

(Signalspannung U_S)

0

Schlüssel einschieben

Signal Rücksetzen — U3-N

Signal log 1 — U2-N

Jst-Jnformations-Eingabe — log 1 / log 0

Takt-Signal — UT

Schieberegister-Takt — Takt-Sperre

# FIG. 28

magnetische
Jnduktion B

B6 (U_S6)
B5 (U_S5)
B4 (U_S4)
B3 (U_S3)
B2 (U_S2)
B1 (U_S1)

(Signalspannung U_S)

0

Signal Rücksetzen — U5-N

Signal Jnf. Niveau 4 — U4-N

Signal Jnf. Niveau 3 — U3-N

Signal Jnf. Niveau 2 — U2-N

Takt-Signal — UT

Eingabe:
Jst-Jnf.-Niveau 4 — JN4-P
Jst-Jnf.-Niveau 3 — JN3-P
Jst-Jnf.-Niveau 2 — JN2-P
Jst-Jnf.-Niveau 1 — JN1-P

Takt-Eingabe Jst-Jnf-Niveau — Takt-Sperre

Jnf.-Niveau in der Lesedat.-Empfangsschaltung gespeichert

JN4 | JN3 | JN4 | JN1 | JN4 | JN2 | JN2 | JN1

Jnformat.-Stelle → 1 2 3 4 5 6 7

## FIG. 27

Signalspannung $U_S$ (y-axis)

$U_S = f(B)$

Bereich für
Signal Rücksetzen

$U_S 6$

Bereich für Jst –
Jnform. – Niveau JN4

$U_S 5$

Bereich für Jst –
Jnform. – Niveau JN3

$U_S 4$

Bereich für Jst –
Jnform. – Niveau JN2

$U_S 3$

Bereich für Jst –
Jnform. – Niveau JN1

$U_S 2$

$U_S 1$

0

B0   B1   B2   B3   B4   B5   B6

magnetische Jnduktion B

Hysterese – Bereich
zur Übernahme
der Jst – Jnformation

FIG. 29

0 034 597

## FIG. 30

U5 - N $\longrightarrow$ Signal Rücksetzen

U4 - N $\longrightarrow$ JN 4 - P ( Jst - Jnf - Niveau 4 )

U3 - N $\longrightarrow$ JN3 - P ( Jst - Jnf. - Niveau 3 )

U2 - N $\longrightarrow$ JN2 - P ( Jst - Jnf. - Niveau 2 )

JN1 - P ( Jst - Jnf. - Niveau 1 )

Rücksetzen Jst – Jnf. – Flop – Flops
mit log 0

z.B. 100 µs

VZ 2

UT

Takt Eingabe
Jst - Jnf. - Niveau

Takt - Sperre = log 0
nach Übernahme
aller Jst - Jnf. - Stellen J1 ---- Jn

Fig. 31

Fig.32a

Fig.32b

Fig.34a

Fig.33a

Fig.34b

Fig.33b

Fig. 35

Fig. 36a

Fig. 36b

Fig. 36c

Fig. 37a

Fig. 37b

Fig. 37c

0 2 2 2

Fig.38

Fig.39

Fig.40a

Fig.40b

Fig.41

Fig.42

Fig.43

Fig. 44

Fig. 46

Fig. 45a

Fig. 47

Fig. 45b

Fig.48

Fig.49a

Fig.49b

Fig.50